# EUROPEAN PATENT SPECIFICATION

(11) **EP 2 342 272 B1**
(45) Date of publication and mention of the grant of the patent: **25.09.2013**
(21) Application number: 09749167.4
(22) Date of filing: 08.10.2009
(51) Int. Cl.: C23C 18/16, C08J 9/40, B01J 37/00, C04B 41/88, C04B 41/51, B01J 35/04, C04B 41/00

(54) **PREPARATION OF NANOSTRUCTURED MICROPOROUS COMPOSITE FOAMS**
HERSTELLUNG VON NANOSTRUKTURIERTEN MIKROPORÖSEN VERBUNDSCHAUMSTOFFEN
PRÉPARATION DE MOUSSES COMPOSITES MICROPOREUSES NANOSTRUCTURÉES

(30) Priority: 09.10.2008 GB 0818520
(43) Date of publication of application: 13.07.2011
(73) Proprietor: University Of Newcastle, Newcastle Upon Tyne NE1 7RU (GB)
(72) Inventor: AKAY, Galip, Newcastle Upon Tyne NE1 7RU (GB); CALKAN, Burak, Newcastle Upon Tyne NE1 7RU (GB); HASAN, Hasni, Newcastle Upon Tyne NE1 7RU (GB); MOHAMED, Rozita, Newcastle Upon Tyne NE1 7RU (GB)
(74) Representative: Wilson, Peter David George
(86) International application number: PCT/GB2009/002403
(87) International publication number: WO 2010/041014

(56) References cited:
- WO-A1-2004/005355
- FR-A1- 2 860 730
- US-A- 5 143 614
- US-A1- 2004 081 847
- US-A1- 2008 281 003
- SOTIROPOULOS S ET AL: "Nickel incorporation into a hollow fibre microporous polymer: a preparation route for novel high surface area nickel structures" MATERIALS LETTERS, NORTH HOLLAND PUBLISHING COMPANY. AMSTERDAM, NL LNKD- DOI:10.1016/S0167-577X(97)00283-8, vol. 35, no. 5-6, 1 June 1998 (1998-06-01), pages 383-391, XP004336859 ISSN: 0167-577X
- CALKAN B. , MOHAMED R., AKAY G.: "Preparation of catalyst systems with enhanced accessibility of active sites for process intensification" CHISA 2006 - 17TH INTERNATIONAL CONGRESS OF CHEMICAL AND PROCESS ENGINEERING, 27 August 2006 (2006-08-27), - 31 August 2006 (2006-08-31) XP008122388

## Description

### FIELD OF INVENTION

This invention relates to the fabrication of monolithic polymeric, metallic and ceramic nano-structured micro-porous foam materials or their combination as composites which have a hierarchic pore structure. In the invention, these materials are produced following a general procedure described in more detail below.

### BACKGROUND TO THE INVENTION

Porous materials either in the form of membranes, powder, granulates or monoliths have several important applications ranging from membrane processes, catalysts / catalyst support, enzyme / fungi / bacteria / mammalian cell support, structural light weight / functional material and more recently as micro-reactors and micro-bioreactors. Pore size, pore shape, pore connectivity, and their distribution, pore volume fraction, chemical - biochemical nature of the material, mechanical strength and its temperature dependence are important in specific applications.

### Catalysts with hierarchical porous structure

Although catalysis accelerates reaction rates and chemical conversions, accessibility of the reactants to and removal of products from the catalytic sites are important in order to realize the full potential of catalysts. Supported catalyst systems are intended for these provisions. Catalysts are either deposited as a thin film on a support or they are used as pellets. These two techniques have certain drawbacks: in coated systems, catalyst adhesion can be nonuniform and weak while the accessibility of the active sites within the interior of the catalyst is hindered due to low porosity, small pore size and connectivity. Therefore, when the catalysted reactions are transport limited, even such systems can not provide adequate accessibility of the catalytic sites since the support materials themselves restrict transport processes.

In recent years, so called 'structured catalysts' have become available in order to address these problems. Here the catalyst supports are often in the form of macro-porous foams or monoliths which actually form the reactor, acting as a static mixer at the same time. In order to increase the surface area of the monolithic catalyst supports without excessive pressure drop, macro-channel systems (used in catalytic converters in automotive industry) are employed. In these systems, not only the local hydrodynamic conditions but also the catalyst coating thickness can be controlled to obtain well defined catalytic reactors and they invariably outperform reactors with catalyst particles in a packed bed or stirred tank configuration. Monolithic reactors combine the advantages of fixed bed (ease of handling) and turbulent stirred tank reactors (intense contacting) while providing a narrow residence time distribution, avoiding poor distribution and scale-up problems.

Monolithic catalyst systems with non-porous/low porosity walls also suffer from certain disadvantages, such as cost, low catalyst loading, integrity of the catalyst coating on the monolith channel walls and the presence of two independently controlled length scales which only provide partial accessibility of the catalytic sites. The accessibility of the nano-sized catalytic sites is achieved most effectively by a hierarchical channel or pore network structures which are ubiquitous in nature, such as in a cardio-vascular system or organs (liver, kidney, lung) and also plant nutrient cycle systems. In these systems, the main biophysical-chemical processes are principally controlled at the molecular/nano - scale as many of these processes are transport limited, while the continuous supply and removal of reactants / products are achieved through capillaries/pores of ever increasing diameter. Such a system provides an optimum architecture incorporating micro-nano scale bio-physically / chemically functional features within the macro-system (organ) through a functional connectivity network (cell-cell communication) at an optimum surface area (for catalytic conversion) per unit organ volume. Such hierarchically structured catalyst systems with fractal-like meso- to macropore size distribution can be expected to be more efficient and robust due to the enhanced surface area and accessibility as well as the fact that the catalyst material also forms the overall structure providing physical strength and integrity.

### Preparation of porous materials with hierarchy of pore sizes

In the design of novel hierarchical porous catalysts with pore size range of ca. 100 µm to a few nanometer, the first step is to obtain structures with controlled size and use them as templates in order to obtain the hierarchical structures. Templates include spherical latexes or carbon nanoparticles / carbon nanotubes, macro- and micro-emulsions two-dimensional micro-molding and micelle or substrate templating. During some template based synthesis, hierarchical pore structures appear.

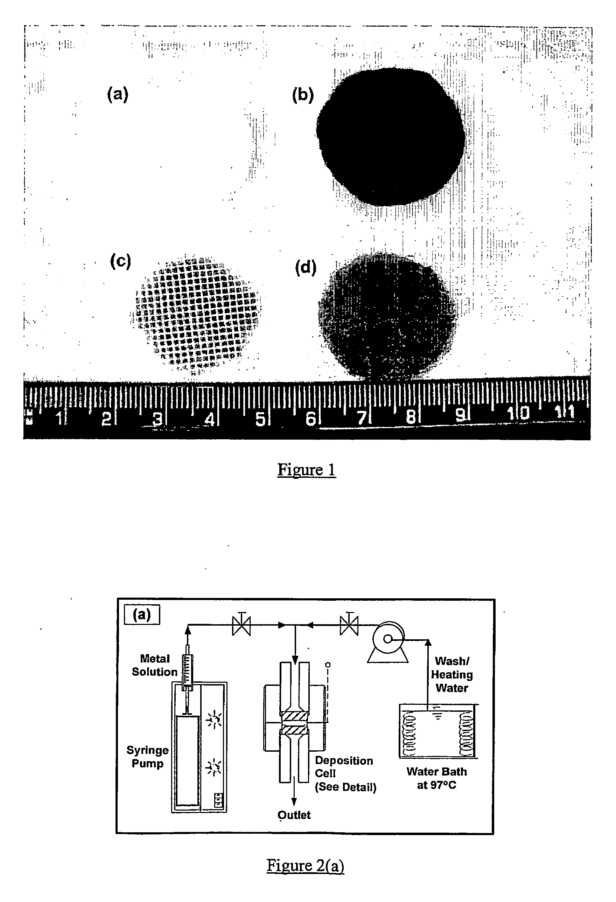

Catalysts with hierarchical porous structures in monolithic form have been obtained using electroless metal deposition under flow conditions using macro-porous polymeric materials prepared by a high internal phase emulsion (HIPE) polymerisation route. These polymers are generically known as PolyHIPE Polymers reflecting their processing history. These polymers can be prepared either in particulate form or as monoliths with any size and shape, due to their capacity to be moulded at the emulsion stage. Depending on the processing history and composition of the HIPE, PolyHIPE Polymers can have hierarchical pore and interconnects over a size range ca. 10000 µm to nanometer range while the pore volume can reach as high as 97% for practical applications. They can be chemically and biologically functionalised for different applications which include bioprocess / chemical process intensification and miniaturization. Here, PolyHIPE Polymers as well as other porous materials (containing a carbon source or no-carbon source such as glass fibre wool) are used as templates to electrolessly deposit metals and subsequently heat treat the resulting constructs to obtain catalytic reactors with a hierarchy of pores in the form of monoliths. The versatility of PolyHIPE Polymers stems from the fact that the pore structure can be controlled over a wide range of sizes. Other support systems were also used: carbon felt, ceramic monolith, nylon fiber mat, glass wool, metal wire, carbon fiber, textile fabric. The macroscopic appearance of these materials is shown in Figure 1.

### Electroless metal deposition

Electroless metal deposition technology is nearly a century old. The main applications of this technology include corrosion, wear resistant coatings, as well as micro-electronic. In most electroless deposition applications involving non-metallic surfaces, pre-treatment (sensitization/activation) of the surface is necessary. This involves the exposure of the surface to metal solutions such as SnCl₂, PdCl₂ and AgNO₃ to deposit metals with catalytic activity. Smoothness of the coating is essential to provide the desired visual, mechanical and chemical attributes.

The chemical deposition of a metal from an aqueous solution of a salt has an electrochemical mechanism, both oxidation and reduction (redox) reactions involving electron transfer between the reacting species. The simplest form of chemical plating is through metal displacement reactions which however cannot be sustained when the surface of the dissolving (anodic substrate) metal is covered by the cathodic deposition of the more noble metal from its solution. Therefore, chemical plating via a displacement process has few practical applications.

In order to continuously build thick deposits by chemical deposition without consuming the substrate, the deposition must occur initially and exclusively on the substrate and subsequently continue to deposit on the initial deposit. As the name implies, electroless plating (deposition) is the continuous deposition of metal from aqueous solution on a substrate without the use of an external electric power. In general, electroless plating is characterized by the selective reduction of metal ions only at the surface of a catalytic substrate immersed into an aqueous solution of the said metal ions, with continued deposition on the substrate through the catalytic action of the deposit itself. Since the deposit catalyzes the reduction reaction, the term 'autocatalytic' is also used to describe the plating process.

Electroless nickel (EN) plating is the most important catalytic plating process in use. The physical-chemical properties of an EN coating depend on its composition as well as deposition condition of the EN plating bath. Typically, the constituents of an EN plating bath are:
1. a source of metal (nickel) ions
2. A reducing agent
3. Complexing agents
4. Stabilizers/inhibitors
5. Energy

In EN technology, the preferred source of nickel cations is nickel sulphate, while other nickel salts such as nickel chloride and nickel acetate are used in very limited applications. As reducing agents, sodium hypophosphite, sodium borohydride, dimethylamine borane and hydrazine are commonly used. These reducing agents are structurally similar in that each contains two or more reactive hydrogens, and metal reduction is a result of the dehydrogenation of the reducing agent. The metal ion deposition pathway is complex and is dependent on the type of reducing agent. The inclusion of phosphorus or boron results in the formation of nickel alloys (Ni-P and Ni-B) which subsequently determines the properties of the deposit. The general characteristics of EN deposition are:
1. the reduction of nickel is always accompanied by the evolution of hydrogen gas.
2. The deposit is not pure nickel but contains phosphorus, boron or nitrogen, depending on the reducing agent used.
3. The reduction takes place only on the surface of certain metals, but must also take place on the depositing metal.
4. Hydrogen ions are generated as a by-product of the reduction reaction.
5. The utilization of the reducing agent for depositing metal is considerably less than 100 percent.
6. The molar ratio of nickel deposited to reducing agent consumed is usually equal to or less than 1.

Depending on the operating conditions, the type of reducing agent and its concentration in the plating path, then the concentration of nickel in the coating varies. Boron baths can yield deposits with nickel concentration in the range of 90-99.9% nickel, while hydrazine can yield nickel deposits over 99% nickel with nearly 100% reducing agent utilization.

Complexing agents are often used in nickel plating solutions and are usually organic acids or their salts. However, inorganic pyrophosphate anions and ammonium ions are also known. The functions of the complexing agent includes:
1. buffering of the plating solution to prevent rapid pH decay.
2. Preventing the precipitation of nickel salts.
3. Reducing the concentration of free nickel ions.

Stabilizers are used in the plating solutions in order to prevent plating bath decomposition when the metal precipitation takes place autocatalytically with the evolution of hydrogen gas in the solution. Such bath decomposition is a result of localised reduction of the metal in the presence of hydroxyl ions on the surface of colloidal particles. Such particles may be extraneous or are created by the precipitation of metal salts at high pH. Stabilizers act as catalytic inhibitors and they can be divided into the following groups:
1. compounds of Group VI elements; S, Se, Te,
2. Compounds containing oxygen: AsO⁻²; IO⁻³; MoO⁻⁴
3. Heavy metal cations: Sn⁺², Pb⁺², Sb⁺³,
4. Unsaturated organic acids: Maleic, itaconic acids.

The operating concentration of the stabilizers increases with the stabilizer group number; at sub-ppm to few ppm for the groups 1 and 2, 10⁻⁵ M to 10⁻³ M for group 3 and 10⁻³M to 10⁻¹ M for group 4 stabilizers. It also appears that the agitation of the plating bath (especially through the bubbling of oxygen) increases stability.

Energy requirement for the electroless plating is usually supplied thermally. The rate of deposition increases exponentially with temperature which therefore affects the morphology of the metal coating.

French Patent Application FR 2860730 (Ecole Polytech) discloses a method comprising the incorporation of a gel precursor in the pores of a ceramic, polymerising the precursor within the pores, and chemically depositing a metal onto the ceramic substrate.

### SUMMARY OF THE INVENTION

Accordingly, the invention provides a method of producing a monolithic metal or metal composite having a hierarchic pore structure, the method comprising the steps of: selecting a template material, said template material having a porous structure, wherein the template material is a Polyhipe Polymer, formed via an emulsion comprising monomeric materials and wherein the emulsion of the Polyhipe Polymer is intimately mixed within the pores of a porous ceramic material prior to polymerisation and the monomeric materials subsequently polymerised; contacting the template material with a solution of the or each metal to be structuralised; depositing the or each metal onto the template; washing the metal coated template before deposition of further metal; isolating the metal coated template material; and removing, thermally, at least a portion of the template material.

The metal or metal composite materials produced have good structural integrity and high surface area suited for catalytic purposes. Such materials also have a high degree of controllable porosity.

Preferably, the Polyhipe Polymer is sulphonated or the PolyHIPE Polymer is a co-polymer of styrene and vinyl pyridine to increase the hydrophilicity of the polymer template.

Conveniently, the PolyHIPE Polymer template has pores in the size range of from 1-300 micron.

Preferably the temperature at which the template is removed is from 600-1000°C and especially preferably 800°C to give a stronger product.

The or each metal deposited is preferably selected from nickel, tungsten, cobalt, copper, zinc, rhenium or palladium. Especially preferably, the metal is nickel. More preferably, the source of the nickel is nickel sulphate.

The deposition is conveniently achieved by means of a reducing agent which is further conveniently selected from dimethylamine borane, sodium hypophosphite or hydrazine.

More preferably, the metal from which the composite is to be formed is nickel and the deposition is achieved by means of a reducing agent which is dimethylamineborane. Preferably, in this case, the temperature at which the metal is deposited onto the template is in the range 70 to 90°C.

In preferred embodiment of the method, the metals from which the composite is to be formed are nickel and tungsten and the deposition is achieved by means of a reducing agent which is sodium hypophosphite.

Comparitive reference methods are also described herein.

### Brief Description of the Drawings

The invention, and reference methods, is now described with reference to the following drawings.
Figures 1 show the template materials: (a) PolyHIPE Polymer (PHP), (b) a refrerence material, being a carbon fibre felt, (c) ceramic monolith, (d) a refrerence material, being a nylon fibre felt;
Figures 2(a) and (b) illustrate apparatus suitable for the process;
Figures 3(a) to (g) are SEM micrographs of a Nickel-Phosphorus construct;
Figure 4 shows the influence of phosphorus concentration on grain structure;
Figure 5 shows the inner core of a Nickel-phosphorus construct;
Figure 6 is an SEM micrograph of the template PolyHIPE Polymer;
Figures 7(a) - (d) show deposition of Nickel-Boron (Molar ratio 0.5) onto a PolyHIPE Polymer at a temperature of 55 C;
Figures 8(a) - (c) show deposition of Nickel-Boron (Molar ratio 0.5) onto a PolyHIPE Polymer at a temperature of 90 C;
Figures 9(a) - (c) show deposition of Nickel-boron (Molar ratio 0.2) onto a PolyHIPE Polymer at a temperature of 90 C;
Figures 10 (a) - (d) are SEM micrographs of electroless deposition of Ni-B on PHP at 500x magnification after heat treatment at 600°C a) Deposited in PHP at 90°C b) Deposited in PHP at 75°C c) Deposited in PHP at 55°C d) Deposited PHP at 40°C;
Figure 11(a) - (d) are SEM micrographs of electroless deposition of Ni-B on PHP at 10000x magnification after heat treatment at 600°C a) Deposited in PHP at 90°C; b) Deposited in PHP at 75°C c) Deposited in PHP at 55°C d) Deposited in PHP at 40°C;
Figure 12(a) - (d) are SEM micrographs of electroless deposition of Ni-B in PHP at 25000x magnification after heat treatment at 600°C a) Deposited in PHP at 90°C b) Deposited in PHP at 75°C c) Deposited in PHP at 55°C d) Deposited in PHP at 40°C;
Figures 13(a) - (b) show grain skins produced using nickel chloride and sulphate respectively after heat treatment;
Figures 14(a) - (b) show disc outer surfaces produced using nickel chloride and sulphate respectively;
Figure 15 a cross-section of a metal disc formed using nickel chloride;
Figure 16 is a top surface of a nickel-tungsten construct;
Figure 17 shows the structure of a metal grain in a nickel-tungsten construct;
Figure 18 shows the structure of a metal grain in a nickel-tungsten construct;
Figure 19 shows the nano-porous structure of a metal grain in a nickel-tungsten construct;
Figure 20 shows a ceramic monolith / PolyHIPE Polymer construct;
Figure 21 shows a ceramic monolith / PolyHIPE Polymer construct;
Figures 22(a) - (b) show ceramic monolith disk filled with PolyHIPE Polymer and Ni-P metal foams;
Figure 23 shows a nickel-phosphorus foam within a ceramic monolith construct;
Figure 24 - 26 show nickel-phosphorus deposited on a carbon felt fibre;
Figures 27 (a) - (c) show a porous skin on nickel-phosphorus deposited on a carbon felt fibre;
Figures 28(a) - (b) to 30 show electroplated fibres as illustrated in Figures 24 - 27;
Figures 31 and 32 show the fibres of Figure 30 after heat treatment;
Figures 33(a) - (b) show nickel-phosphorus deposited on a nylon fibre;
Figures 34(a) - (c) show the fibres of Figure 33 following heat treatment;
Figures 35(a) - (c) show the nanopores in the metal fibres of Figure 34;
Figure 36 show elemental analysis of the fibres of Figure 35 by X-Ray Diffraction (XRD);
Figures 37(a) - (b) show cross-sections of the metal fibres heat treated at (a) 600 °C and (b) 1000 °C;
Figure 38 show cross-sections of the metal fibres heat treated at 800 °C;
Figure 39 to 41 show channels within a metal fibre;
Figure 42 show nickel-phosphorus deposited on a glass fibre wool;
Figure 43 and 44 are cross-sections of the fibre in Figure 42;
Figure 45 show an aged nickel-phosphorus construct;
Figure 46 shows the grain structure of the fibre of Figure 45;
Figure 47 shows aged grain structure of the fibre of Figure 45
Figures 48(a) - (b) show an aged palladium plated nickel-phosphate foam;
Figure 49 shows the presence of channels in the foam of Figure 48;
Figure 50 shows an aged palladium plated nickel-phosphate foam;
Figure 51 shows the internal structure of the foam of Figure 50 at increasing magnifications;
Figure 52 shows an aged palladium plated nickel-phosphate foam;
Figures 53 (a) - (f) show the surface of Ni-Co-P foams. a) General view showing the surface and inner structures; (b,c) Detail of surface structure; (d,e,f) Detail of the inner structure.
Figure 54 is an SEM of a Ni - Re - P foam structure;
Figures 55(a) - (c) are SEMs illustrating the structure of Ni-Re-W-P metal foams;
Figures 56(a) - (d) are SEMs at different, increasing, magnifications, illustrating PolyHIPE Polymer / Silica (Bindzil-30) composite structures;
Figures 57(a) - (d) are SEMs at different, increasing, magnifications, illustrating magnesium coated PolyHIPE Polymer /Silica (Bindzil-30) composite structures;
Figures 58(a) - (d) are SEMs at different, increasing, magnifications, illustrating magnesium coated PolyHIPE Polymer /Silica (Bindzil-30) composite structures after heat treatment at 600 C.;
Figures 59(a) - (d) are SEMs at different, increasing, magnifications, nickel-phosphorus alloy deposited on PolyHIPE Polymer / Silica composite;
Figures 60(a) - (c); show PolyHIPE Polymer structures obtained on using a styrene (38%) and Vinyl trimethoxy silane (30%) as co-monomers in oil phase with aqueous phase initiator.
Figures 61(a) - (c) show PolyHIPE Polymer structures obtained on using a styrene (63%)-vinyl trimethoxy silane (5%) as co-monomers in oil phase with aqueous phase initiator.
Figure 62 (a) -(b): Structure of styrene (63%) - vinyl trimethoxy silane (5%) PolyHIPE Polymer obtained by using oil phase initiator (1 wt% Lauryl peroxide) showing the usual open PolyHIPE Polymer structure compared with the coral PolyHIPE Polymer structure described in Figures 60 and 61.

### General Methodology

The method by which the materials are produced can be summarised generally as follows:
1. Production of a template highly porous polymeric material is produced which is subsequently used to deposit metals.
2. PolyHIPE Polymers can be used as templates for the electroless deposition of metal or metals, including alloys.
3. When these polymer-metal/alloy composites are heat treated, the polymeric template disappears and nano-structures are formed within the metal/alloy or the ceramic phase which nano-structures are often catalytic. Such catalytic sites are accessible through a network of interconnecting holes.
4. These monoliths can be fabricated into micro-reactors which are more efficient in chemical conversions.
5. If PolyHIPE Polymer is hydrophilic through, for example, sulphonation, silica dispersion can be adsorbed on the walls of the PHP.

The above summary illustrates the general scope of the present invention and describes the applications of such materials.

### METALLISATION OF POLYHIPE POLYMERS

In each electroless nickel deposition experiment a solution of 5 grams Nickel Chloride, and 20 grams of Sodium Hypophosphate Hydrate both dissolved in 300 mL double distilled water was used. Solution pH was adjusted to 11.5 by adding 40 mL ammonium hydroxide solution (35% concentration). This solution was passed through the template polymer with periodic washing with water. The procedure was repeated by reversing the deposition direction in order to provide uniform metal distribution across the thickness of the template.

### Template PolyHIPE Polymer (PHP)

PHP template was prepared using 78% styrene, 14% Span 80 and 8% divinylbenzene benzene in the oil phase. The aqueous phase contained 1% potassium persulphate in double distilled water. The phase volume of the template PHP was 95% in order to obtain a highly open pore polymer. The emulsion preparation was conducted in the mixer using an agitator speed of 300 rpm. Dosing was completed in 1 minute and another 2 minute mixing was allowed. The temperature of the aqueous phase was 60 °C.
The resulting polymer was washed in water and iso-propanol and the pore size was evaluated using a scanning electromicroscope (SEM). In order to accelerate the metal deposition, it is possible to include nickel ions (such as nickel chloride) in the aqueous phase. Although this also ensures uniform deposition of some metal without the use of the metal bath, the emulsion can become unstable and form very large pores as a result of destabilization of the emulsion to reach ca. 5000 microns during polymerization. As droplet coalescence and polymerization processes take place simultaneously, complete emulsion breakdown may not occur, instead, the resulting PolyHIPE Polymer may have very large coalescence pores dispersed into the smaller primary pores.

### Deposition Equipment

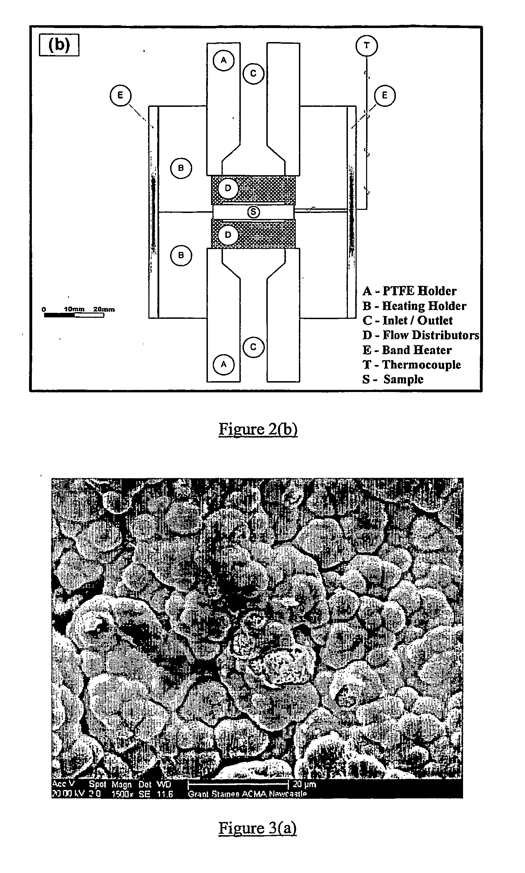

The flow diagram of the metal deposition is shown in Figure 2(a). A metal deposition cell was constructed as illustrated in Figure 2(b). The deposition cell houses the template PolyHIPE Polymer in the form of a disk (4 mm thick and 26 mm in diameter). Referring to Figure 2(b), PHP template sample (S) is sandwiched between two Teflon flow distributors (D) at the end of the Teflon flow channel (C) bored into the holders (A) which also act as support for PHP. The whole assembly was then placed between two circular brass blocks (B) which were electrically heated using a band heater (E). Note that the PHP template is in direct contact with the brass holder to provide direct heating. The temperature of the PHP template was monitored using a thermocouple (E) in contact with the polymer. All parts of the flow cell which were in direct contact with the metal bath solution were made of Teflon in order to prevent metal deposition in the flow channels. The metal bath solution was kept at room temperature and was pumped into the deposition cell using a syringe pump at a rate of 2 mL/min. In order to cause metal deposition within the pores of the template polymer, the temperature of the solution was raised to 93 +/- 4 °C. In order to achieve this, the deposition cell was charged with demineralized water at 97 °C for 5 minutes at a rate of 40 ml/min. This was followed by the syringe pumping of the metal bath solution. After pumping 50 ml solution, the temperature of the template PHP decreased below 90 °C, when the deposition was stopped and hot water washing was renewed and the cycle repeated. After using 300 ml metal bath solution, the direction of flow was reversed until sufficient amount of metal was deposited. It is possible to reverse the flow direction after each 50 ml deposition and washing in order to obtain more uniform deposition.

### Nickel Phosphorus Alloys

### 2.3.1. Nickel-Phosphorus Bath:

### In 300 ml of water :

| | |
|---|---|
| Nickel chloride | : 5g |
| Sodium hypophosphate hydrate | : 20g |

Ammonium hydroxide solution (35%) : 40 ml (for pH adjustment at pH=11.5)

In each electroless nickel deposition experiment a solution of 5 grams Nickel Chloride, and 20 grams of Sodium Hypophosphate Hydrate both dissolved in 300 mL double distilled water was used. The solution pH was adjusted to 11.5 by adding 40 mL ammonium hydroxide solution (35% concentration). This solution was passed through the template polymer with periodic washing with water. The procedure was repeated by reversing the deposition direction in order to provide uniform metal distribution across the thickness of the template.

Metal deposition was completed when no more bath solution could be passed through the template material. Approximately 3.2 gram metal deposition was achieved when nickel/phosphorus or nickel/boron were used while for nickel/tungsten baths resulting constructs the value was 0.9 gram. In all cases, the polymer template weight was 0.085 gram. The polymer/metal deposit was gradually heated in a furnace to 600 °C at a rate of 10 °C/min so that the heating time was 60 min in all cases. Upon reaching the target temperature, the material was kept for one hour and subsequently taken out to cool outside the oven.

These materials were then examined under Scanning Electron Microscopy (SEM) as illustrated in Figures 3(a) - (g). In order to illustrate the effect of each template and metal pair, the following properties are considered, as obtained from the SEM examinations.
1. Skin formation around the metal disks produced.
2. Skin structure
3. Skin thickness
4. Inner structure (micro-pore formation)
5. Grain formation (micro-pores are formed from the deposition of the grains)
6. Grain surface structure
7. Grain inner structure

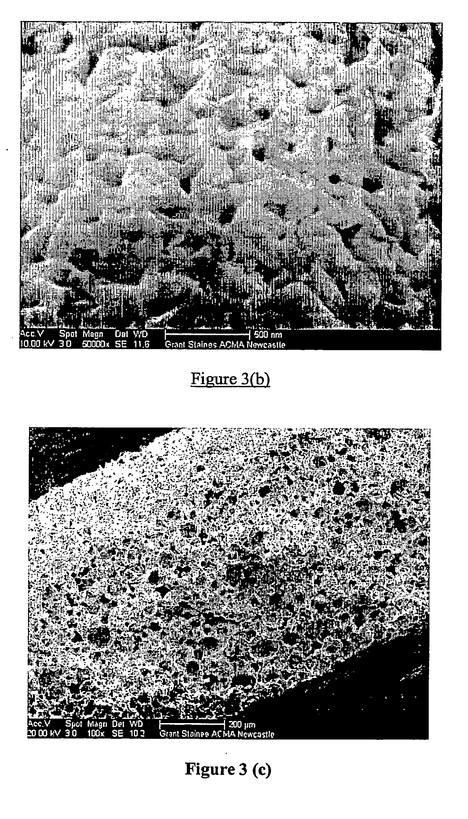

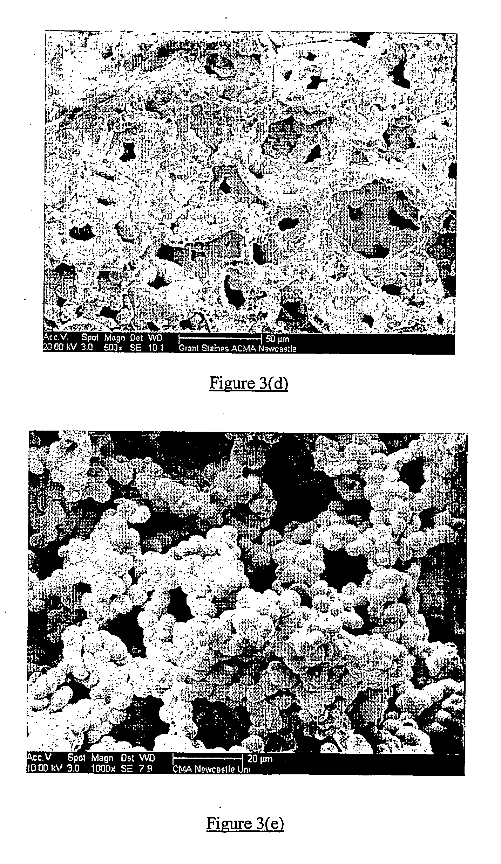

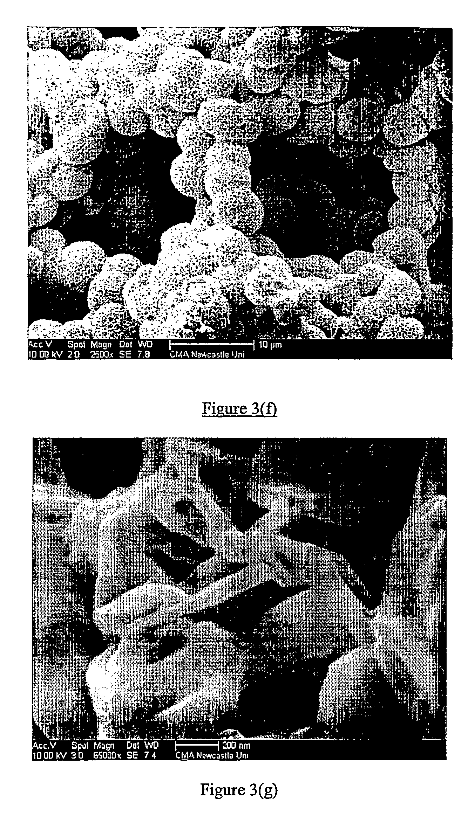

The Figures 3 show the following features. Firstly, Figures 3(a) and 3(b) show the presence of inner structure in a Nickel-Phosphorus skin metal grain and the surface structure of the grain inner core respectively. Figure 3(c) shows the skin at low magnification and the transformation of the dense surface structure into a more open structure. The same effect at higher magnification is shown in Figure 3(d). Micropores can be seen to be formed (Figures 3(e) and 3(f) which are formed by coalescence of metal grains. In Figure 3(f) the grains can be seen to have a nano-structure. Details of the surface structure of the grains are shown in Figure 3(g).

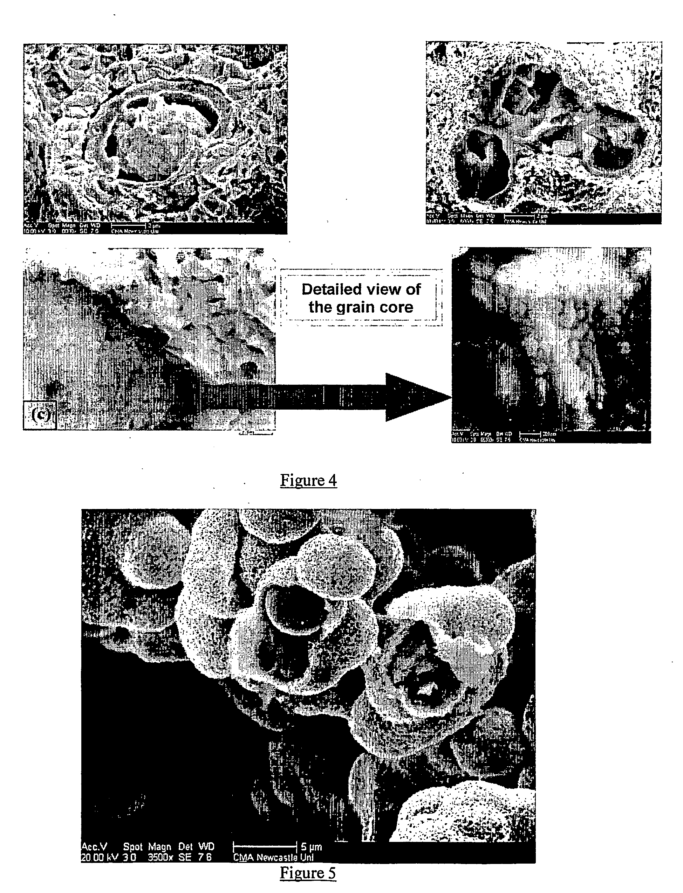

In the further Figure 4 are shown, the inner grain structures and the influence of phosphorus concentration.

The appearance of the inner core structure of the Nickel-Phosphorus construct at high magnification is shown in Figure 5. This shows the formation of the micro-pores by the coalescence of the metal grains and the presence of nano-structures on the metal grains similar to samples obtained for non-sulphonated PolyHIPE Polymer templates. The effect of sulphonation (see below) appears to be the formation of highly smooth metallic cores within the grains (Figure 5).

### Metallization of PolyHIPE Polymer - Nickel - Boron constructs

### Electroless deposition solution

In each metal deposition experiments the following Ni-B bath composition was used:
- 0.19 M Nickel Chloride - The source of nickel ions
- 0.38 M Dimethylamine Borane - Reducing Agent
- 0.27 M Sodium acetate - Complexing Agent
- 3.88 10⁻⁴M Sodium Laurylsulphate- Stabilizer
Initially, nickel chloride was dissolved in 300 cm³ deionised water at room temperature, followed by the addition of dimethylamine borane, sodium acetate and sodium lauryl sulphate. Mixing continued until a clear bath solution was obtained. The solution pH was adjusted to 7.2 by adding sufficient amount of ammonium hydroxide solution (35% concentration). Mixing was conducted using a plastic coated magnetic stirrer at all stages of solution preparation as well as during the deposition stage.

After the deposition of sufficient metal, the PolyHIPE Polymer - Nickel - Boron construct was fractured and the fracture surface examined under scanning electron microscope to determine the size and distribution of the nickel-boron deposit. Full constructs or part of the constructs were then heat treated in order to degrade the polymer template. After the decomposition of the polymer (600 C), either further SEM examination was conducted or the metallized constructs were subjected to further heat treatment.

Approximately 2.0 +/- 0.3 gram metal deposition was achieved, using a polymer template of 0.085 gram. The polymer/metal deposit was then gradually heated in a furnace to 600 C or 800 C or 1000 C up to a maximum rate of 20 C/min so that the heating time was 60 min in all cases. Upon reaching the target temperature, the material was kept at that temperature for another hour before being taken out to cool outside the furnace. Subsequently, these materials were then examined under SEM.

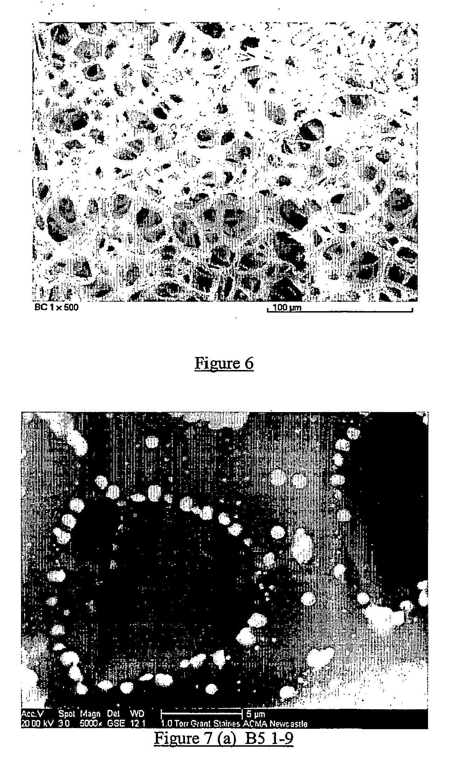

A typical SEM appearance of the template PolyHIPE Polymer is shown in Figure 6 indicating a highly open microcellular pore structure with an average pore size of 60 µm. All the template polymers were prepared under identical processing conditions.

### Deposition behaviour

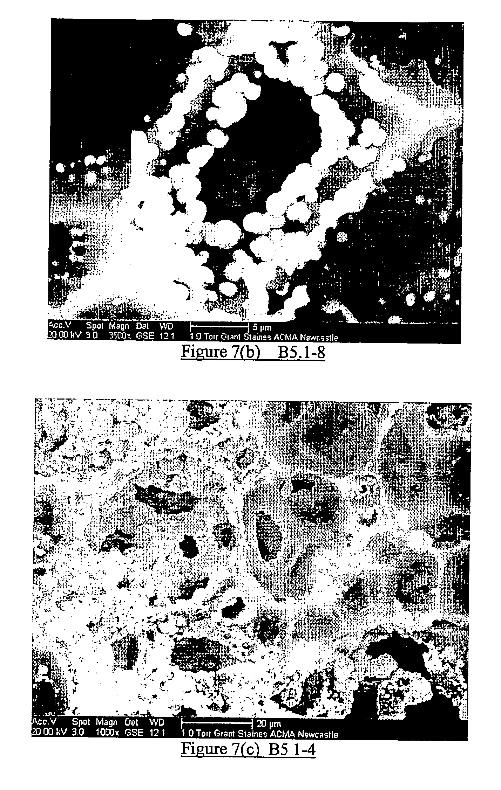

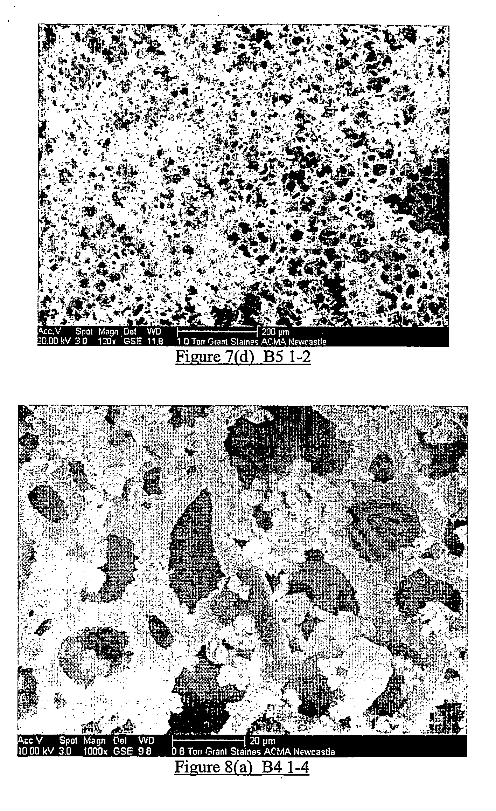

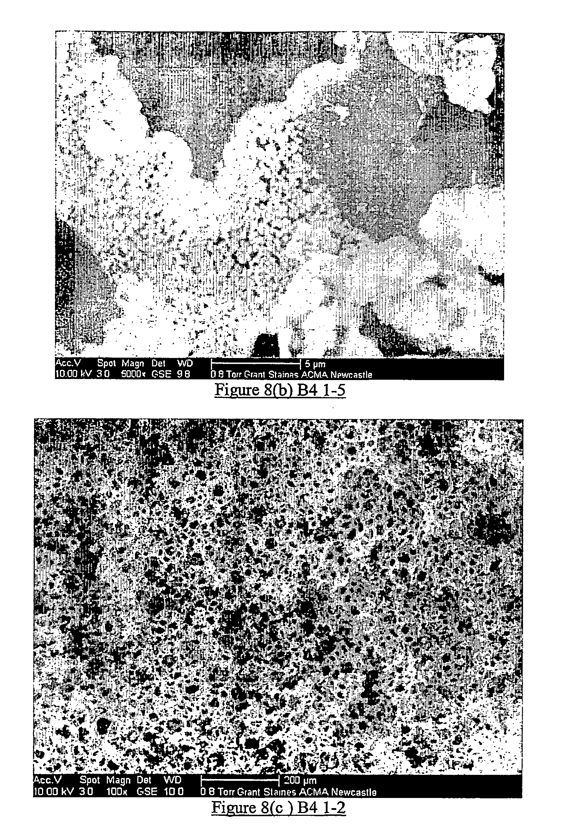

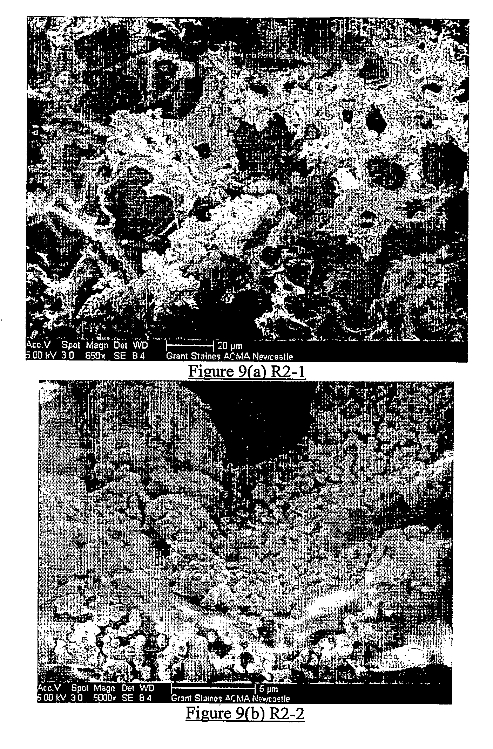

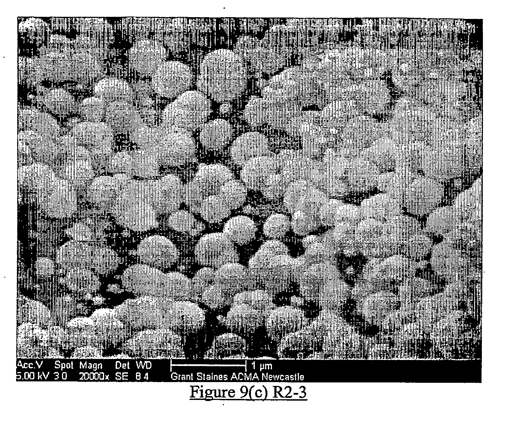

The deposition behaviour of nickel-boron from solution onto the walls of the porous PolyHIPE Polymer under different temperatures and using two different nickel / boron molar ratio in the plating bath was investigated. The results are shown in Figures 7-9. As seen in Figure 7 (a-d) deposition appears to start from the edges of the walls. However, due to the autocatalytic nature of the metal reduction, sites where the deposition first takes place appear to continue to be the sites of further deposition as shown in Figure 7 (b,c). Although the initial seed deposits are small (ca. 0.5 µm) they appear to agglomerate to form larger grains with size 1-5 µm when the temperature is 55°C and the nickel / boron molar ratio is 0.5 as shown in Figures 7 (a-c). As the deposition temperature increases at the same nickel / boron ratio of 0.5, the deposition becomes more homogeneously distributed although the agglomerated grain size is still the same. However not as many agglomerated grains are present as show in Figures 7 (a-c) and 8 (a,b). The overall structure of the constructs prepared at 55 and 90 C are shown in Figures 7 (d) and 8 (c).

The effect of nickel / boron ratio is illustrated when the deposition temperature is 90 C. As the nickel / boron ratio is decreased from 0.5 to 0.2, deposition appear to be more uniform and the size of the metal grains is reduced as a result of reduced agglomeration as the comparison of Figures 8 (a,b) and 9 (a-c) indicate. However, these comparisons are only qualitative and are intended to serve us as guide in optimising the processing conditions and plating bath composition.

### Heat Treatment

Heat treatment was conducted in two stages, burning of the polymer at 600 C for one hour and annealing of the resulting porous metal at 600C for another hour.

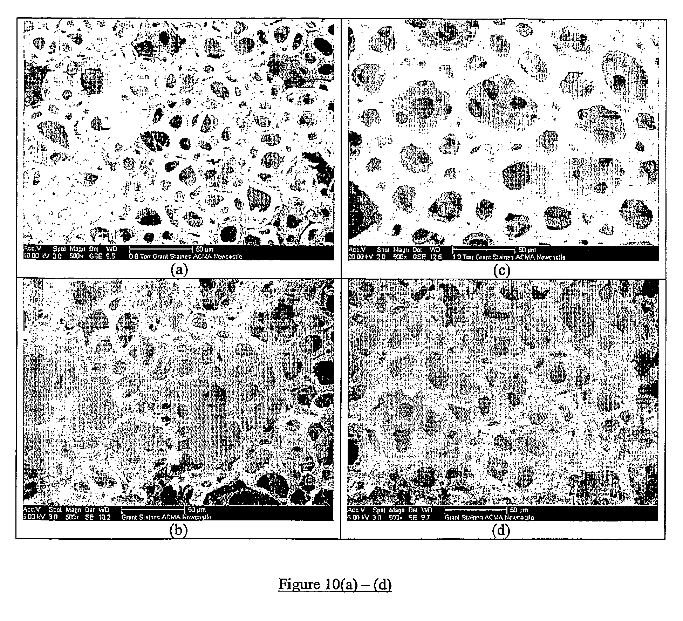

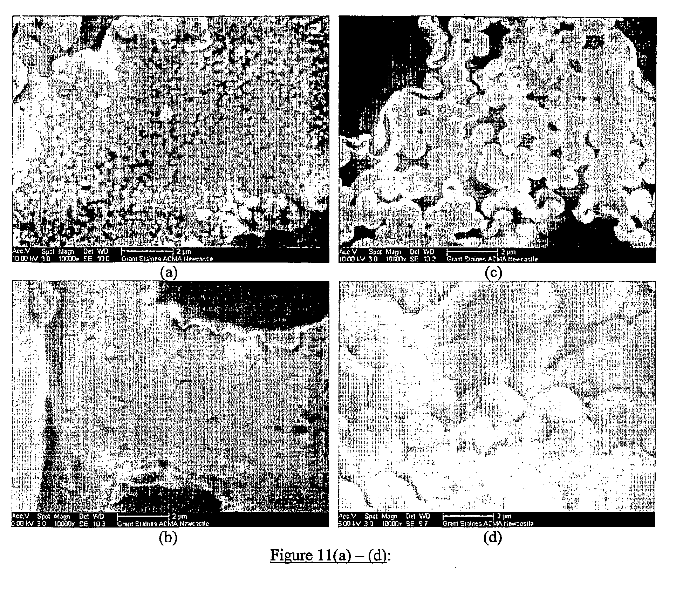

The nickel-boron porous structures are illustrated in Figures 10 - 12 at 3 different magnifications. The effect of deposition temperature on the macro- and nano-scale structures is illustrated in Figures 10 -12 (a-d). It can be seen that the structures at both length scales are affected by temperature. The skeletal structure is formed by small metal grains with size less than a micrometer when the deposition temperature is high (90 or 75° C) while larger agglomerated grains form the skeletal structure when the deposition temperature is low (40°C). Unlike the macrostructures obtained with nickel-phosphorus systems, the pores appear to be more discrete and display high connectivity when the deposition temperature is high (90 or 75°C). As the deposition temperature decreases, the nickel-boron system appears similar to the nickel-phosphorus system but with metal grain size of 1-2 µm as opposed to 5-15 µm encountered in the latter case. However, the connectivity in nickel-boron alloys is far better than that obtained for nickel-phosphorus systems. Therefore, the main reason for these differences is the size of the metal deposit attained at the deposition stage.

Another important difference between the nickel-boron and nickel-phosphorus systems is the absence of skin-core formation in the former case. A dense skin is formed during the deposition of nickel-phosphorus with thickness of ca. 25 µm, which in fact provides strength to the porous nickel-phosphorus alloy. Despite the absence of a skin, porous nickel-boron alloys are stronger and have higher phase volume than nickel-phosphorus alloys.

As indicated previously, electroless plating quality of nickel-boron and nickel-phosphorus systems are similar, illustrating that the deposition behaviour (size of the grains) of both systems on a 2D surface are similar. However, deposition on surfaces within a confined environment appears to be different thus providing another evidence that the behaviour of matter within the macro-environment is different to behaviour in unrestricted 2D surfaces.

The deposition behaviour of nickel-boron within the pores of PolyHIPE Polymer was studied as a function of temperature and nickel-boron ratio. It was shown that the higher deposition temperatures (ca. 70 -90°C) resulted in smaller (ca. 0.5 µm) metal grain deposits of smaller size compared with lower deposition temperatures (ca. 55 - 40°C) when the grain size increased to ca. 2 µm. When the substrate polymer was degraded following heat treatment at 600 C, the resulting macro- and nano-scale structures of the porous metal were affected by the size of the initial metal grains. Smaller deposits resulted in more discrete metal pores with high connectivity. High boron concentrations also yielded smaller grain size. Unlike nickel - phosphorus systems when a skin-core structure is formed, no skin is present in the nickel-boron systems as a result of the small size of the metal grain deposits. Furthermore, nickel-phosphorus baths yielded large (10-20 micron) grains while nickel-boron compositions yielded much smaller grains (ca. 1 micron). The use of nickel sulphate, instead of nickel chloride resulted in an open pore skin as shown below.

### Effect of Nickel Source on Skin Formation

Here, two different nickel sources were used, namely, nickel chloride and nickel sulphate. Microscopic examinations showed that the internal structures of the metallic foams produced by using both nickel sources were similar. However, there were different features on the outside surface of the metal foam disks.

Nickel chloride was employed in the plating bath as the nickel source to produce binary nickel-phosphorus or nickel-boron alloys. When the reducing agent was sodium hypophosphite, Ni-P deposits were produced by basic plating baths. On the other hand, when dimethylamine borane was used as the reducing agent, acidic baths generated the best results for producing Ni-B deposits. Moreover, an entirely different internal structure compared with all types of binary, ternary and quaternary nickel-phosphorus alloys was produced.

When the addition of other element(s) was required to enhance the properties of the metal foam, nickel sulphate was then chosen as the nickel source. When binary nickel-phosphorus deposits were produced with nickel sulphate, the plating bath was preferred to be acidic. In the case of ternary or quaternary nickel alloys, the nickel sulphate baths were generally operated at basic pH values.

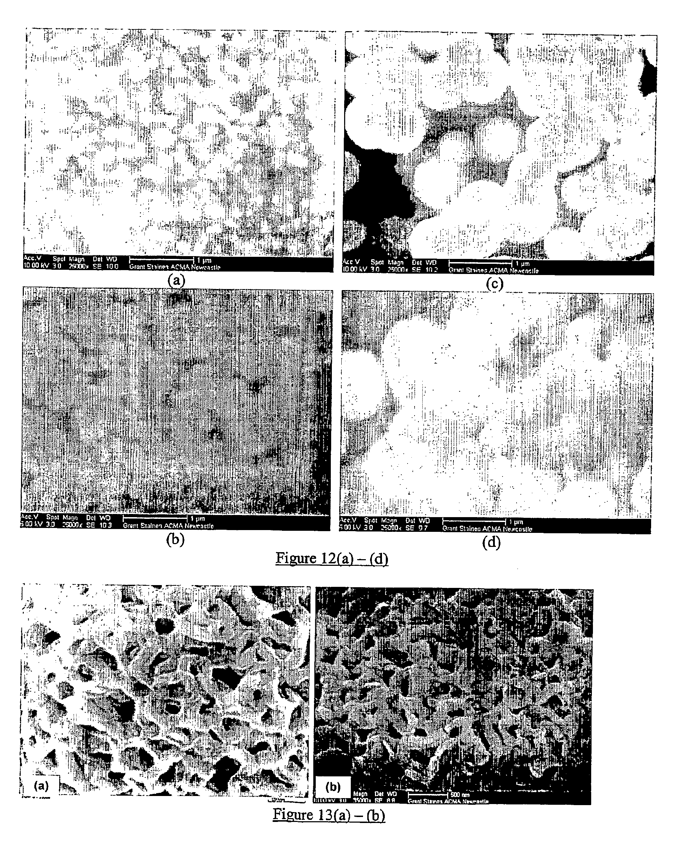

When the internal structure of the metal disks were examined, it was observed that grain formation, grain shapes and grain sizes were very similar whether the nickel source was nickel chloride or nickel sulphate. Moreover, both nickel sources seemed to produce identical grain skin pores when they were subjected to the same heat treatments as explained above. For instance, grain skins are shown in detail in two samples which were produced by using nickel chloride and nickel sulphate respectively (Figures 13 (a) and (b)). They were both heat treated at the same temperature and both had grain skin pore sizes from less than 100nm to 250nm.

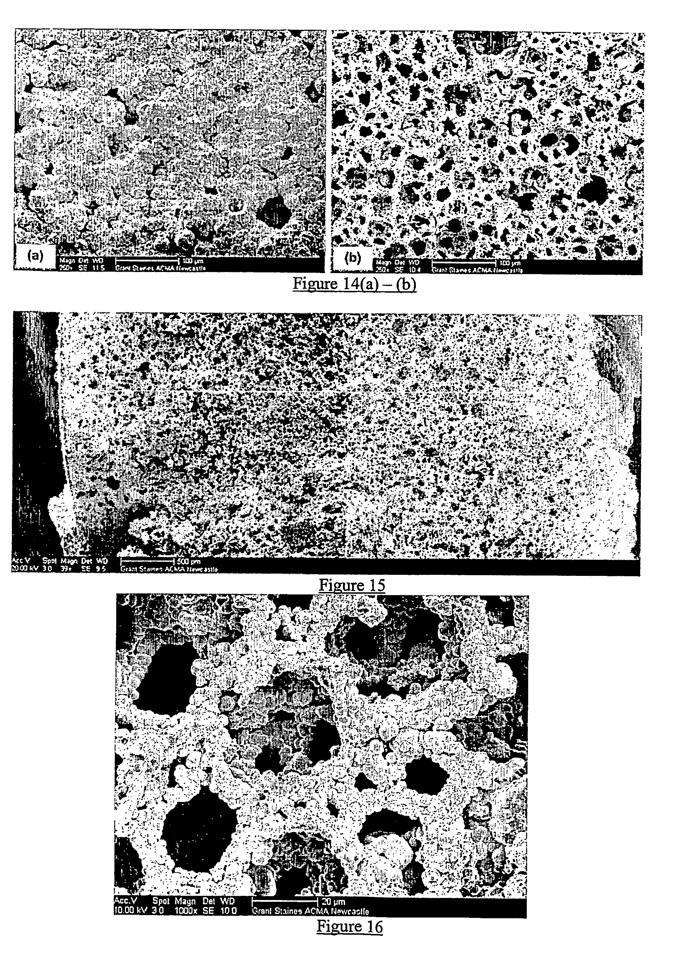

However, when the outer surfaces of the metal disks were examined, differences were perceived. On the outer surfaces of metal disks produced by nickel chloride, a thick and very strong protective layer (crust) formation was observed. On the other hand, when nickel sulphate was used, there was no crust formation on any part of the outer surface of the disks. Figures 14 (a) and (b) show two samples which were produced by nickel chloride and nickel sulphate as the nickel sources, respectively. The pictures were taken from the top surfaces of metal disks. The sample in Figure 14(a) shows the general appearance of a crust which was much denser and had fewer pores compared to the sample in Figure 14 (b), which was the top surface of a disk with no crust formation. It can be clearly seen that the second structure was completely open on the outer surfaces and much more accessible than a disk with a crust formation.

A cross-section of a metal disk, produced by nickel chloride as the nickel source, is shown in Figure 15. The crust formation on the left and right edges (top and bottom surfaces of the disk) can be seen in the picture. As can be seen from the picture, the crust is denser and relatively less porous.

### Metallization of PolyHIPE Polymer - Nickel - Tungsten Constructs

### Nickel-Tungsten Bath:

### In 300 ml of water :

| | |
|---|---|
| Nickel sulphate hexahydrate | : 2.13gr |
| Sodium hypophosphite hydrate | : 8.83gr |
| Sodium tungstate dihydrate | : 10.49gr |
| Sodium citrate | : 9.69gr |
| pH | : 10.0 |

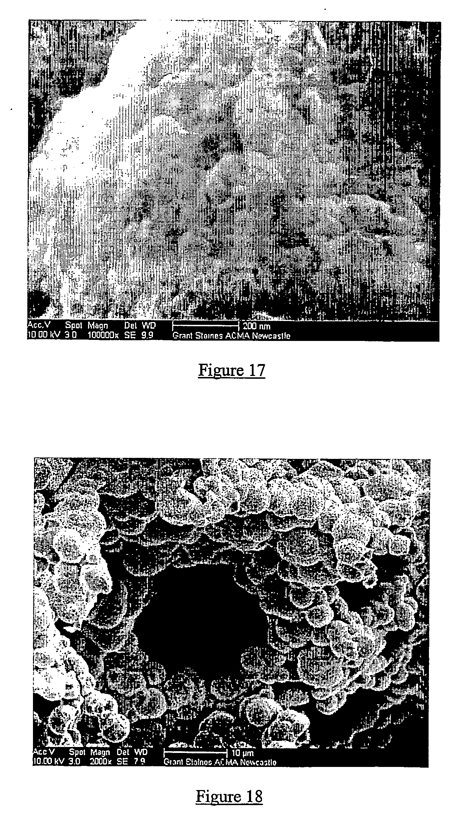

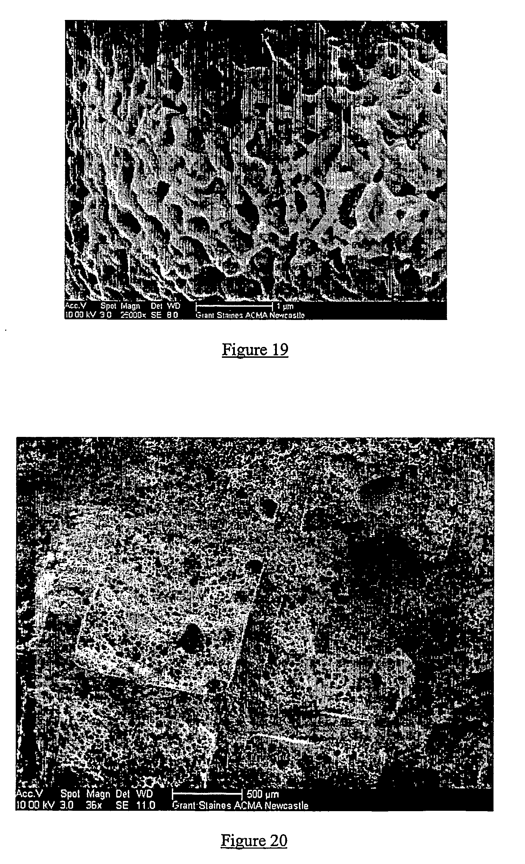

Nickel-Tungsten binary system was deposited in the same manner as Nickel-Phosphorus system followed by heat treatment at 600 C for 2 hours (1 hour heating and 1 hour curing). Figure 16 shows the top surface of a Nickel-Tungsten construct at high magnification showing the presence of a completely open structure unlike the previous cases. This structure propagates across the sample. In Figure 17, the detailed structure of the metal grains forming the micro-structure of the Nickel-Tungsten construct at high magnification shows the presence of nano-pores on the fused metal grains. When the inner structure was analysed, a microporous structure was revealed formed by coalescence of metal grains similar to the grain structure on the surface (Figure 18). Once again, these fused grains have nano-porous surface structure as shown in Figure 19.

Although with nickel chloride the fully deposited disk weighed around 3.0 g, when the nickel source was nickel sulphate, a fully deposited disk weighed around 0.8 - 1.0 gr. This weight is normal and deposition was good.

EDX of the general area (surface) indicate that the atomic percentages of various elements were: Nickel= 72.77%; Tungsten= 5.01%; Oxygen= 20.31%; Phosphorus= 1.90%

### Effect of Substrate

### Ceramic Monoliths

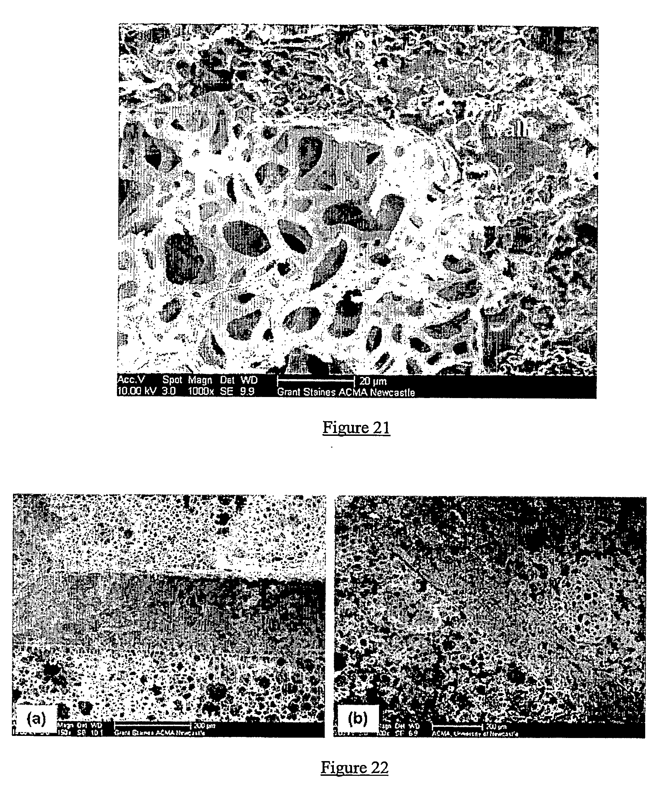

In order to obtain composite ceramic/metal supported monoliths, ceramic monoliths commonly employed in car exhaust systems, were used. When the ceramic disk was put into the HIPE, all the channels of the disk were filled with HIPE. After polymerization took place in the oven, the channels were completely filled with PHP (Figure 20). Because there were no gaps left on the boundary between the PHP and the ceramic walls (Figure 21) for the plating solution to flow away, the PHP in the ceramic channels was ready to be metallized.

After metallization of the PHP in the channels of the ceramic disk, the PHP was removed by heat treatment. Because the ceramic disk was resistant to the heat treatment at 600 °C, the remaining structure was a ceramic disk with channels filled with metal foam. Figures 22 (a) and (b) show the ceramic disk channels filled with PHP and Ni-P metal foam, respectively.

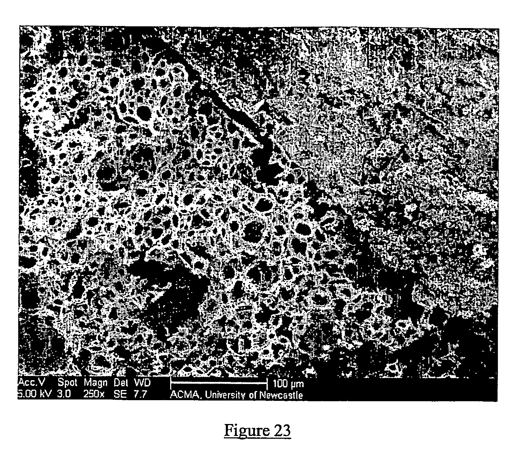

Metallization of the ceramic monolith channels in this case was performed by Ni-P. It is also possible to deposit Ni-B or polyalloys in the channels by using the convenient plating solutions.
Closer examination of the metal structure showed that, the metal foam was typical of that for other Ni-P foams with large pores of ca. 30 to 40 µm, connected by interconnecting pores, which could go up to half the size of the primary pores (Figure 23).

### Carbon Fiber Felt (REFERENCE METHOD)

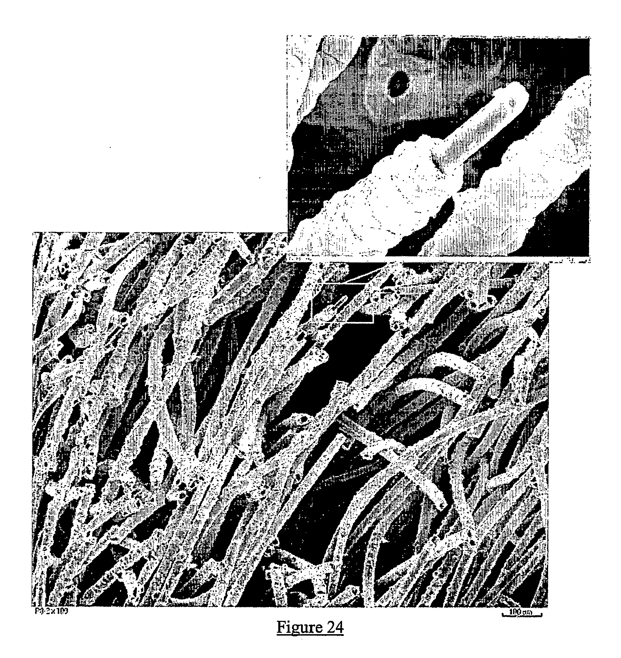

The advantage of fibre felts (or mats) is that the pore volume can be adjusted by confining the fibres within a certain volume. Metallization of carbon fibre felt was carried out by depositing Ni-P around the fibers. It is possible to deposit Ni-B or polyalloys around the fibers by choosing the appropriate plating solutions. Deposition was sustained until each fiber was completely covered with Ni-P deposits (Figure 24). A magnified image of the region, around a fully deposited carbon fiber (illustrated in smaller rectangle of Figure 24) shows the deposition characteristics can be seen on the magnified picture.

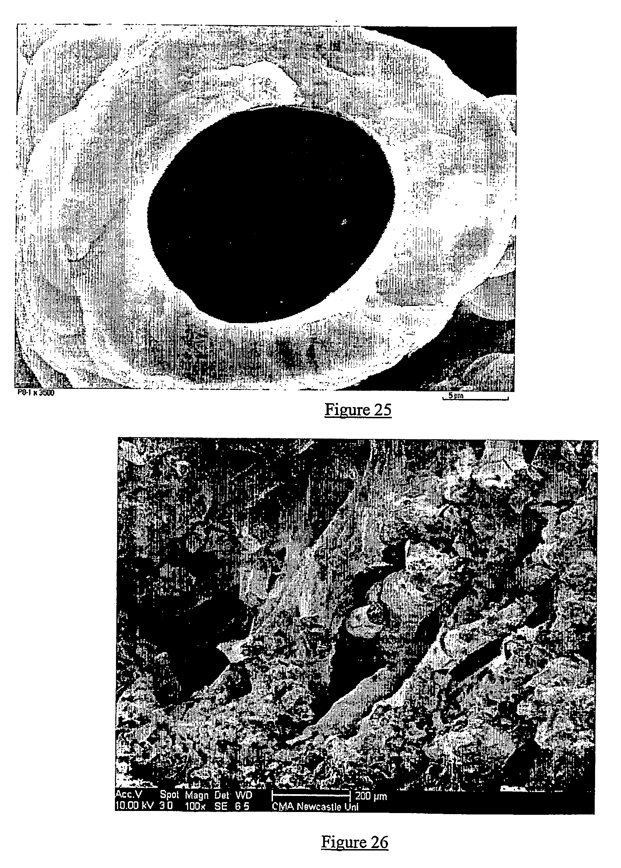

The initial Ni-P deposits around the fibers were in the form of spherical grains, as it was shown in the magnified picture in Figure 24. But, even at this stage (before the heat treatment), the deposits were more fused than the metal deposits in the pores of PHP. As the deposition continued, the thickness of the deposits around the fibers increased. When there was sufficient amount of deposition around all the fibers, the wall thicknesses of the metal deposits around the fibers were around 6.5 to 8 µm, making the whole fiber diameter around 30 to 35 µm (Figure 25)

After the fully deposited disk was heat treated, the carbon felt was thermally decomposed, leaving a structure composed of metal fibers. The general area of the metal-deposited carbon-fiber disk was analyzed by EDX after the heat treatment. Results are shown in Table 1.

**Table 1. EDX analysis of Ni-P constructs with carbon felt as substrate.**

| **Spectrum** | **Oxygen (at%)** | **Phosphorus (at%)** | **Nickel (at%)** | **Carbon (at%)** |
|---|---|---|---|---|
| General Area | 2.47 | 7.36 | 83.54 | 6.63 |

After the heat treatment, all the metal fibers can be seen to be enlarged in size and partially fused (Figure 26).

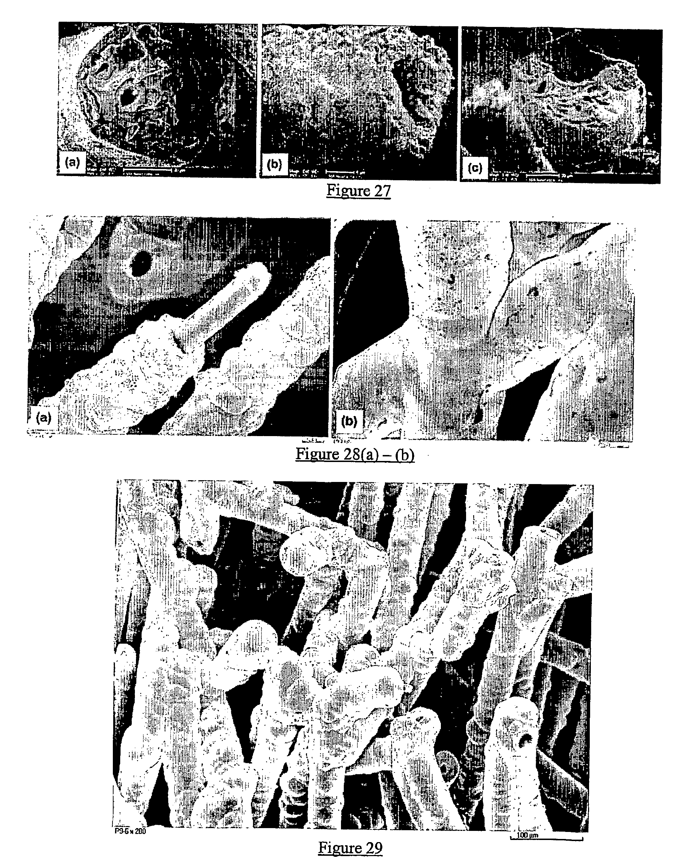

Another effect of heat on the metal fibers was the formation of the porous skin on the surface of the metal fibers (Figures 27 (a) and (b) and (c)), similar to the Ni-P based foams produced by using PHP as the template material. When the metal fibers were examined in more detail, it was observed that all the fibers did not exhibit the same properties. In some of the fibers, the space created by the removal of the carbon fiber was completely filled with the initial metal deposits, around which, a porous skin was formed (Figure 27 (a)). On the other hand, some metal fibers had a hollow channel by the removal of the carbon fiber (Figure 27 (b)) and finally some fibers had a part of the channel space filled with metal deposits, along with an open channel going through (Figure 27 (c)). The structure was so strong after the heat treatment that in order to obtain the fracture surface for microscopic inspection, the 4 mm thick disk could only be broken down with a hammer

### Electroplating on Metallized Carbon Felt (REFERENCE METHOD)

After full metal deposition on the carbon fibers, although the diameter of each fiber was almost doubled with the metal deposits, the metal-deposited carbon-felt disk was still porous. The fibers did not start fusing before the heat treatment.

Nickel-chromium alloys are widely used in industrial applications due to their high strength and resistance to elevated temperatures. Therefore, in order to experiment electroplating a third metal on electroless deposits, a layer of chromium was plated on the Ni-P deposits around the carbon fibers. Electroplating was performed by immersing the Ni-P deposited carbon felt disk in a typical chromium plating solution of :
- 37.5 g CrO₃
- 0.65 g H₂SO₄
The plating bath was made up to 250 ml by adding distilled water. Chromium plating was performed under 1.5 A of electric current for a period of 3.5 hours.

After the fibers were electroplated with chromium, the surface appearance of the Ni-P deposited fibers was changed from a round and granular structure (Figure 28 (a)) to a more smooth structure (Figure 28 (b)). The diameter range of 30 to 35 µm of Ni-P deposited fibers were further enlarged to a range of 44 to 50 µm after chromium plating (Figure 29). The general area of the chromium plated fibers was analyzed by EDX and the results are given in Table 2.

**Table 2. EDX analysis results of the Cr plated fibers**

| **Spectrum** | **Oxygen (at%)** | **Nickel (at%)** | **Carbon (at%)** | **Chromium (at%)** | **Copper (at%)** |
|---|---|---|---|---|---|
| General Area | 14.16 | 1.29 | 4.14 | 80.36 | 0.06 |

Almost all the Ni-P deposits and the carbon fibers were covered with chromium, which was the reason for the very high chromium content in Table 3.3.1. Copper was initially present in the carbon felt before metal deposition, so in some of the samples a trace amount of copper was encountered.

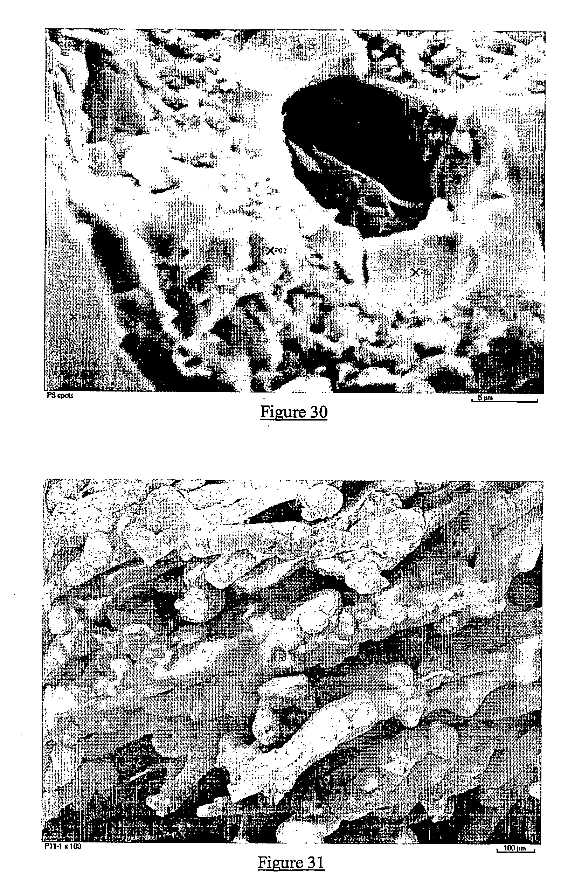

The tip of one of the broken fibers was examined by EDX analysis after chromium plating. The EDX spots can be seen in Figure 30 and the results are given in Table 3. Note that carbon fibres in the carbon felt do not burn until the temperature is raised to over 1000 C. Hence they also provide additional strength to the metallic foam. As the heat treatment was at 600 C, high carbon concentration at the location P01 indicates the presence of carbon fibre. The presence of copper is due to the initial copper deposition present on the carbon felt. The surface of the metallized carbon felt is oxidised but oxidation is low within the inner the grains or where chromium plating is present.

**Table 3. EDX analysis of chromium plated carbon felt at different locations shown in Figure 30.**

| **Spectrum** | **Oxygen (at%)** | **Nickel (at%)** | **Carbon (at%)** | **Chromium (at%)** | **Copper (at%)** |
|---|---|---|---|---|---|
| P01 | 18.36 | 1.69 | 78.72 | 0.68 | 0.55 |
| P02 | 31.93 | 0.51 | 8.78 | 58.74 | 0.04 |
| P03 | 28.67 | 0.39 | 7.37 | 63.37 | 0.21 |
| P03 | 0.50 | 3.28 | 1.50 | 94.70 | 0.02 |

When the chromium plated disk was heat treated at 1000 °C for 1 hour, the fibers enlarged and partially fused (Figure 31). Although the fiber diameters were not uniform after the heat treatment, diameters as high as 100 µm and over were observed (Figure 31).

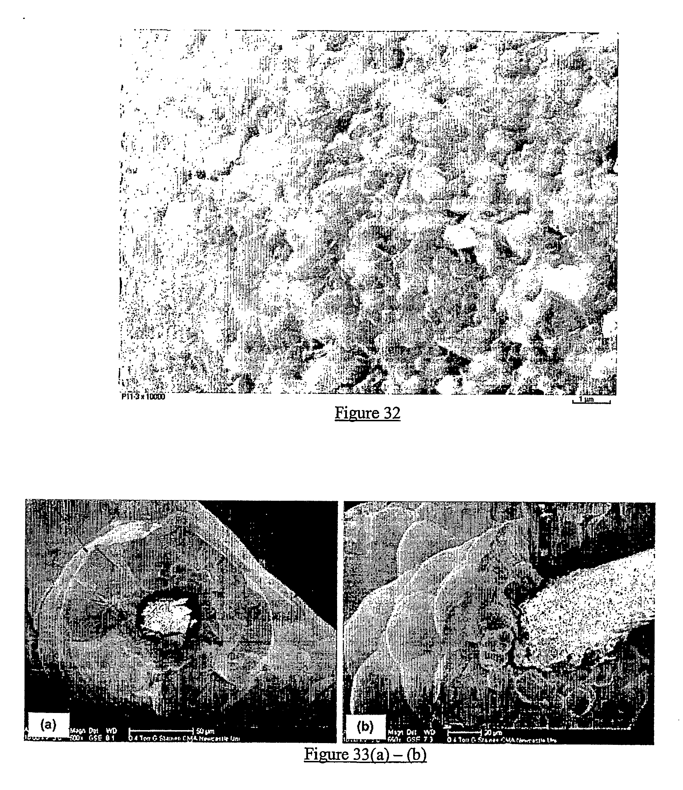

The smooth surface of the chromium plated fibers before the heat treatment (Figure 28 (b)) was changed to a rough surface with less than 1 µm size pores (Figure 32) by the effect of the heat treatment at 1000 °C.

The metal structure was extremely strong after the heat treatment. In order to obtain the fracture surface for microscopic inspection, the 4 mm thick disk could only be broken down with a hammer.

### Nylon Fibre Felt (REFERENCE METHOD)

Metallization of nylon fibre felts was performed by depositing Ni-P on the fibers. It is possible to deposit Ni-B or polyalloys around the fibers by choosing the appropriate plating solutions. Deposition was sustained until all the fibers were completely covered with Ni-P deposits (Figures 33 (a) and (b)). After the deposition around the fibers was completed, the wall thickness of the metal deposits around the fibers was around 50 to 55 µm. So, the whole metal deposited fiber diameter was around 150 to 160 µm (Figure 33 (a))

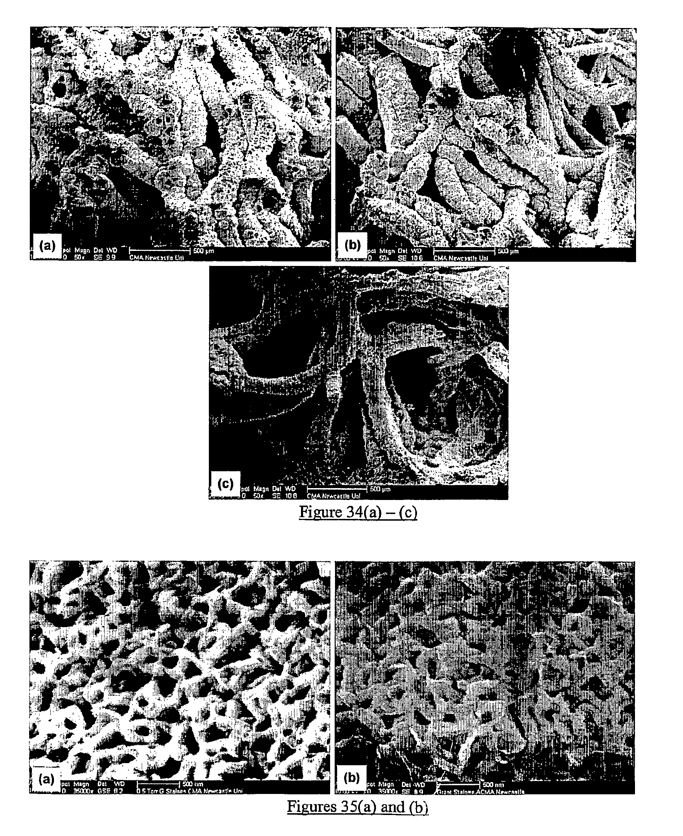

After the metal deposition was completed, thermal decomposition of the fibers was performed at three different temperatures. Figures 34 (a), (b) and (c) show the general appearance of the metal fibers that were heat treated at 600 °C, 800 °C and 1000 °C respectively. As can be seen from the Figures, the structures obtained by 600 °C and 800 °C heat treatments were quite similar in metal fiber shape and orientation (Figures 34 (a), (b)). Although all three heat treatments produced similar metal fiber thicknesses, 1000 °C treatment had a different fiber formation compared to the others (Figure 34 (c)).

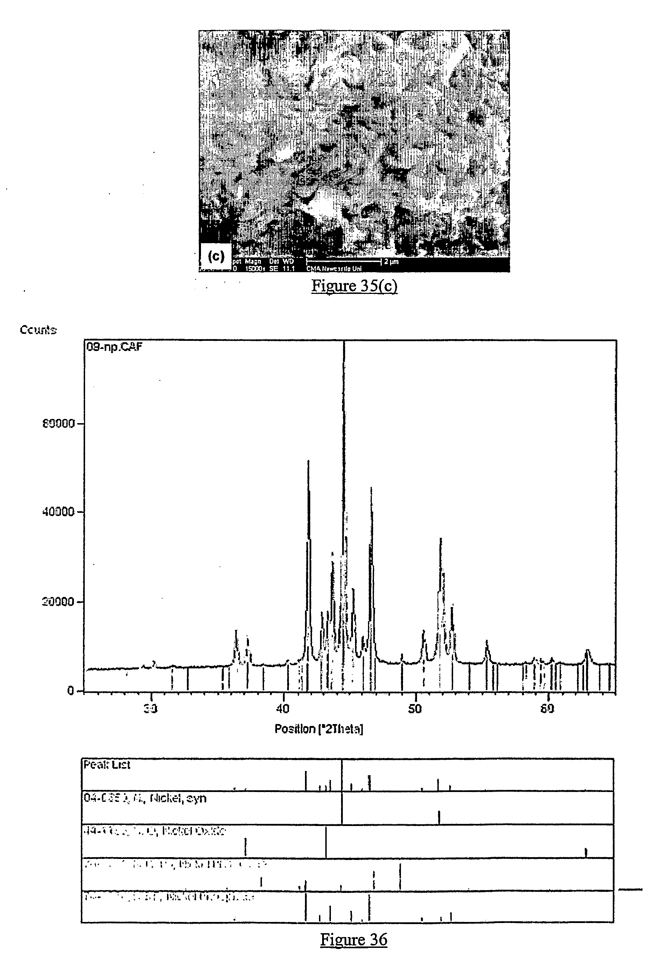

Ni-P fiber surface structures were similar to Ni-P grain surface structures, produced by using PHP as the precursor. The surfaces of the metal fibers had nano-sized pores, as a result of all three different heat treatments. The surfaces of the fibers can be seen in Figures 35 (a), (b) and (c) for heat treatments 600 °C, 800 °C and 1000 °C respectively. Although Ni-P disks, produced by using PHP as precursor, generally did not have porous grain surfaces after heat treatments at 1000 °C due to total fusion of the strands, metal fibers still had a uniformly distributed nano-sized pore structure on the surface of the fibers (Figure 35 (c))

The sample that was heat treated at 600 °C was analyzed by XRD. The result of the X-ray analysis was similar to those produced by using PHP as the precursor material. Elemental Ni and nickel compounds of NiO, Ni₃P, Ni₁₂P₅ were formed after the heat treatment (Figure 36), where Ni was the dominant phase.

When the effect of heat treatment was compared to the strength of the metal fibers, heat treatment at 800 °C resulted in much stronger metal structures, compared to those of 600 °C and 1000 °C. Actually it was so strong after the 800 °C heat treatment that in order to obtain the fracture surface for microscopic inspection, the 4 mm thick disk could only be broken down with a hammer. The difference in the strength of the disks was also observed when the metal fiber structures were examined in more detail. The main difference was spotted on the broken surfaces of the metal fibers.

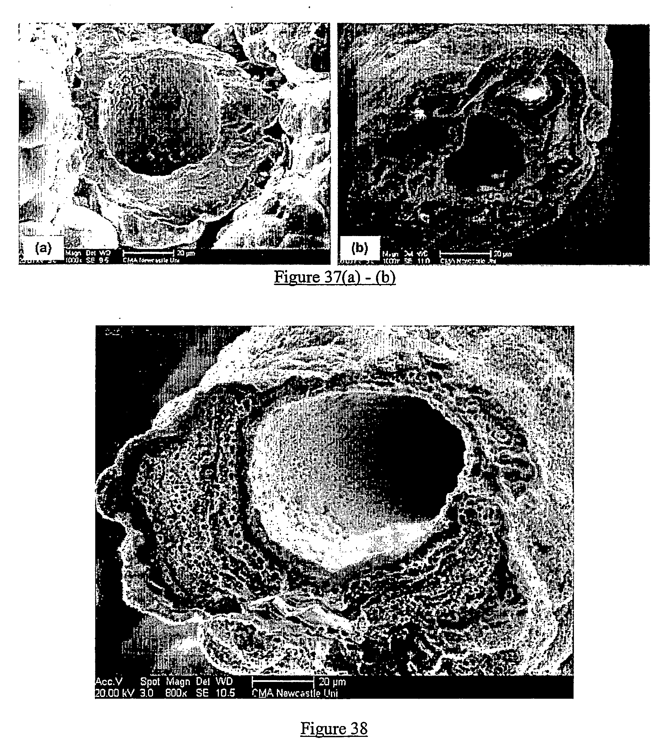

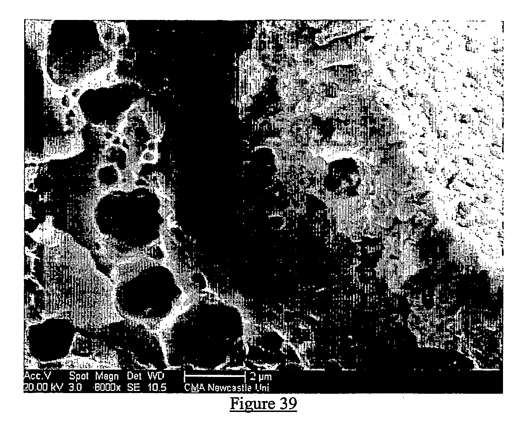

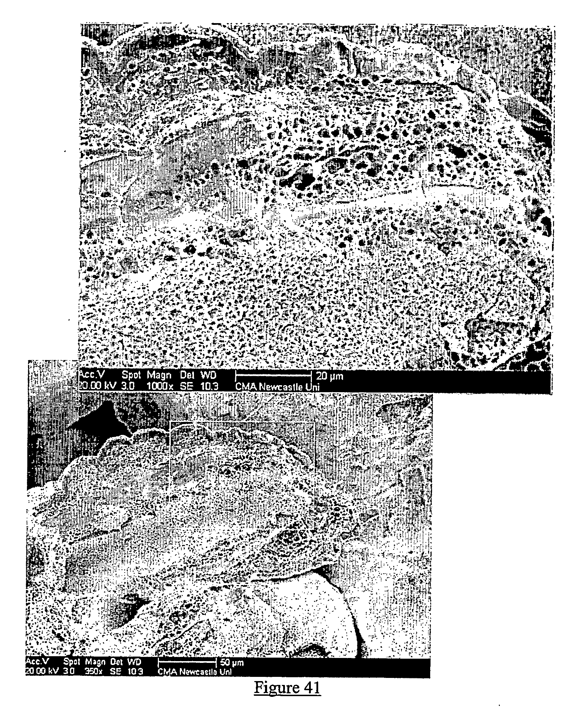

The examination of the broken fibers revealed that, cross-section of the walls of metal fibers that were heat treated at 600 °C and 1000 °C (Figures 37 (a) and (b)) were relatively more solid compared to that of 800 °C (Figure 38).
The diameters of the hollow channels produced by the removal of the nylon fibers were similar, after all three heat treatments (Figures 37 (a), (b) and Figure 39). All metal fibers had channels around 35 to 50 µm. Unlike heat treatments at 600 °C and 1000 °C, the metal fibers that were heat treated at 800 °C, had the nano-sized porous surface, on the inner walls of the channels as well as the outer surfaces of metal fibers (Figures 39 and 41).

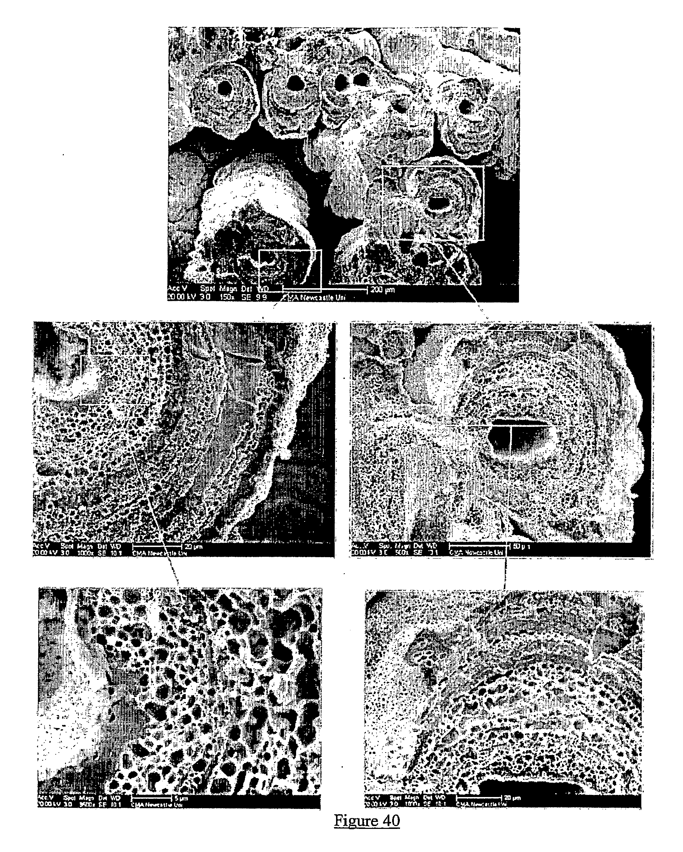

The general appearance of the metal fibers that were heat treated at 800 °C can be seen in Figure 40. The parts, which are marked by rectangles, were magnified in the pictures below them. In addition to the nano-sized pores on the inner and outer surfaces of the metal fibers, the cross-section of the walls had porous structures, where pore sizes ranged from as small as a few hundred nm up to 3 µm (Figures 39 and 40). All the pores on the cross-sections of the walls were lined up around the hollow channels, circling around the center, similar to the pattern observed on a cross-section of a stem of a tree.

Apart from the perpendicular cross-section of the fibers (Figure 40), the cross-section parallel to the hollow channels (Figure 41) was examined to reveal the nature of the pores inside the walls of the metal fibers. The pictures clearly stated that, the pores were not channels; they were micron-sized and nano-sized spherical pores uniformly spread through the walls of the fibers during the heat treatment.

Unlike the fibres in carbon felt, fibres of nylon felt burn at 600 C and hence the metal fibres are obtained at 600 C. Also it is to be noted that the wall structure of the fibres obtained by using carbon and nylon is substantially different; nylon fibres yield highly porous walls compared with carbon fibres which do not burn.

### Glass Fibre Wool (PREFERENCE METHOD)

In each metal deposition experiment, the following Ni-B bath composition were used:

### (dissolved in 300ml deionised water)

- 5.0g(0.19M) Nickel Chloride - The source of nickel ions
- 4.60g (0.38 M) Dimethylamine Borane - Reducing Agent
- 6.64g (0.27 M) Sodium acetate - Complexing Agent
   0.03g (3.88 10⁻⁴M) Sodium Lauryl Sulphate- Stabilizer

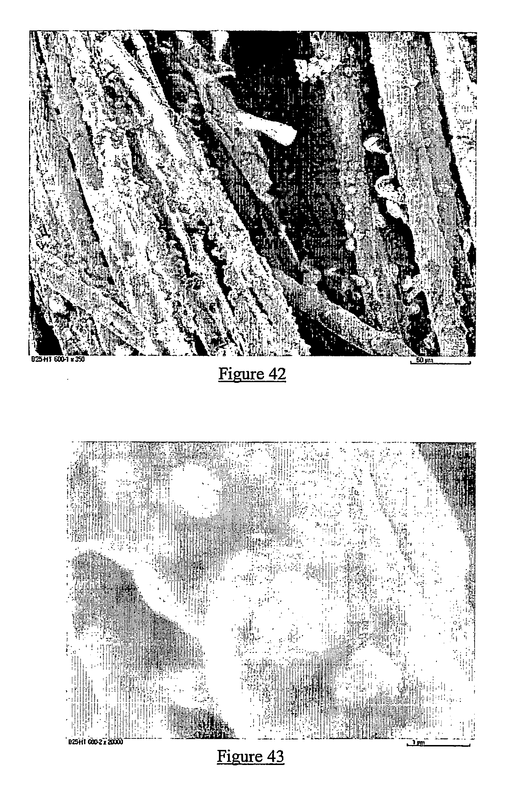

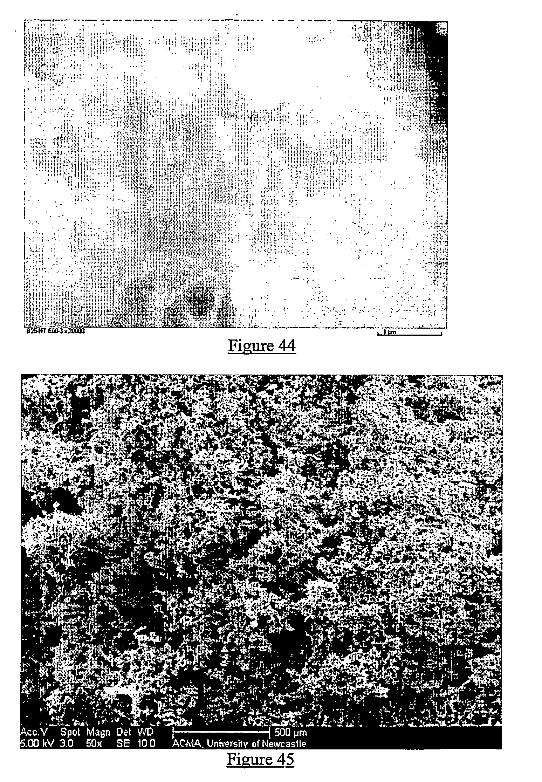

The advantage of using a fibre bundle is that the porosity of the template can be controlled by confining the bundle within a certain volume. Deposition was carried out at 75°C. After deposition, the usual heat treatment was carried out at 600°C for 2 hours starting from the room temperature. The resulting construct was examined under SEM. It is clear that the fine structure of the nickel-boron construct is substantially different from that obtained when using carbon based templates. Figure 42 shows the general appearance of the construct while Figures 43 and 44 illustrate the cross-section of the wall and surface. It is clear that nano-porosity achieved by using carbon-based substrates is not present indicating the importance of the carbon in the formation of nano-structure.

If glass fibers were coated with silane coupling agents, more deposition took place and the resulting structure was stronger.

### Aging of Alloys

The thermal stability of metal foams is extremely important for some structural applications and mainly in functional applications, such as being utilized as catalysts. The aging procedure of Ni-P metal foam was carried out in the oven at 600 °C for 72 hours. After aging, it was observed that the general appearance of the metallic structure was similar to the structures obtained with less than 24 hour heat treatments. The general structure of the metal foam was not distorted; it still followed the contour of the PHP with large pores formed by agglomerated grains (Figure 45) The chemical analysis of this area can be seen in Table 4.

**Table4. EDX analysis result of the structure after aging at 600 °C for 72 hours**

| **Spectrum** | **Oxygen (at%)** | **Phosphorus (at%)** | **Nickel (at%)** |
|---|---|---|---|
| General Area | 28.57 | 3.35 | 68.08 |

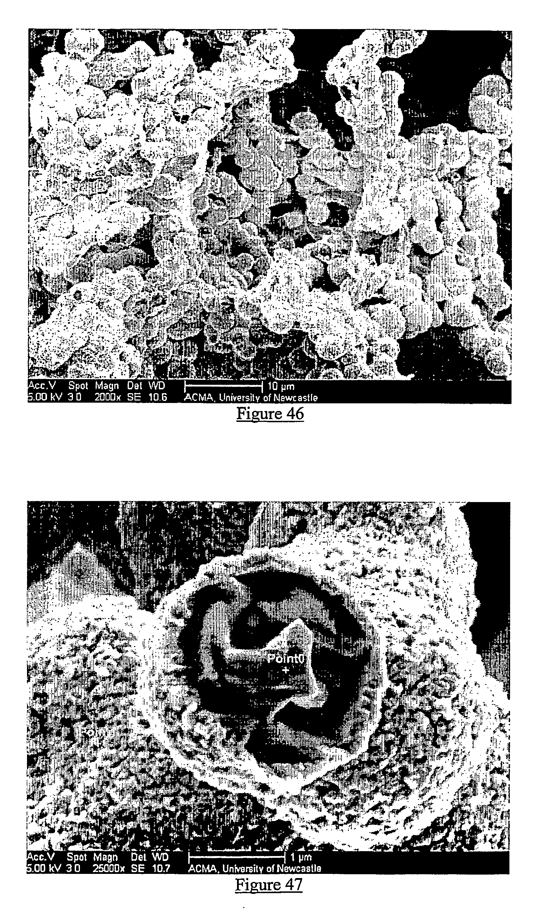

More detailed examination on the formation of the grains showed that the shape of the grains was still uniform and spherical. The grains ranged from 2 to 5 µm in size (Figure 46.)

The grain surface skin remained porous with nano-sized pores, after aging for 72 hours, while the core material was not spherical (Figure 47). The samples that were heat treated for various periods up to 24 hours at 800 °C had wall thicknesses of grain skin from 2 µm down to just below 1 µm. After aging for 72 hours, the thickness of the grain skin was down to around 200 nm (Figure 47).

Chemical analysis was performed on the core material and the grain skin (Table 5), on the EDX spots in Figure 47. Similarly to the EDX analysis of the general area, the spot analysis on the grain skin (Point 1 in Figure 47) showed that the phosphorus content increased to 4.79 at.%. Note that due to prolonged oxidation, oxygen content increased. In catalyst applications, periodic reduction is needed using hydrogen as the reducing agent.

**Table 5. EDX analysis of the spots on the grain skin and the core in Figure 47.**

| **Spectrum** | **Oxygen (at%)** | **Phosphorus (at%)** | **Nickel (at%)** |
|---|---|---|---|
| Point0 (core) | 48.04 | 13.91 | 38.05 |
| Point1 (grain skin) | 46.13 | 4.79 | 49.08 |

### Aging of Palladium Plated Ni-P Foams

Palladium plating of Ni-P metal disks was performed by conventional electroless plating technique. Firstly, a Ni-P metal foam disk was prepared as described previously from a nickel chloride bath. Then the disk was immersed in a typical electroless plating solution, which consisted of:
- 0.01 M palladium chloride
- 0.05 M hydrochloric acid
- 2.35 M ammonium hydroxide
- 0.5 M ammonium chloride
- 0.1 M sodium hypophosphite hydrate
Electroless plating on the surfaces of the disk was carried on for 2 hours at 50 °C. As the nickel source was chosen as nickel chloride while preparing the Ni-P foam before the palladium plating, the disk had crust formation on the surfaces. Therefore, Pd plating was performed in two separate parts:
- plating of a disk with crust formation: hence the Pd was plated on the crust.
- Plating on the internal structure of the disk, where plating was performed after the crust was peeled off.

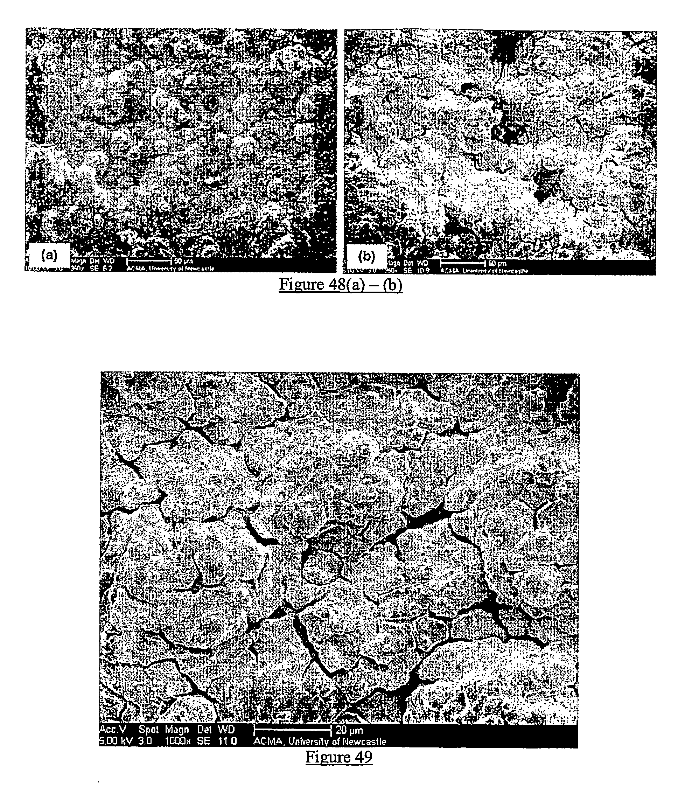

The general appearance of the Pd plated crust, before and after aging at 600 °C for 72 hours, is shown in Figure 48 (a) and (b) respectively. As observed in the regular crust structure, this mostly had a closed structure before and after aging. The difference between the two structures was that, the cracks on the crust were transformed into large channels after the aging process (Figure 49), as well as formation of several randomly positioned large pores on the structure. The chemical analysis of the general area of palladium coated crust after the aging process (Figure 48 (b)) can be seen in Table 6.

**Table 6. EDX analysis of the palladium plated crust after aging at 600 °C for 72 hours**

| **Spectrum** | **Oxygen (at%)** | **Phosphorus (at%)** | **Nickel (at%)** | **Palladium (at%)** |
|---|---|---|---|---|
| General Area | 58.65 | 2.26 | 36.42 | 2.67 |

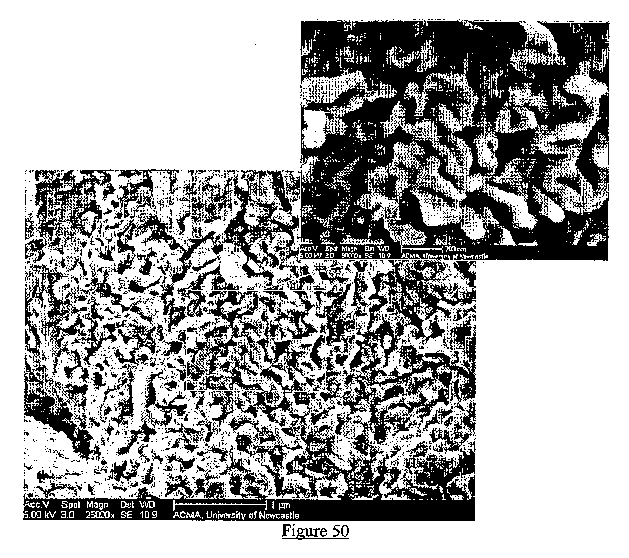

The grain surface of the Pd plated crust, after 72 hours of aging, still had nano-sized pores, where the size of the pores was well below 100 nm (Figure 50).

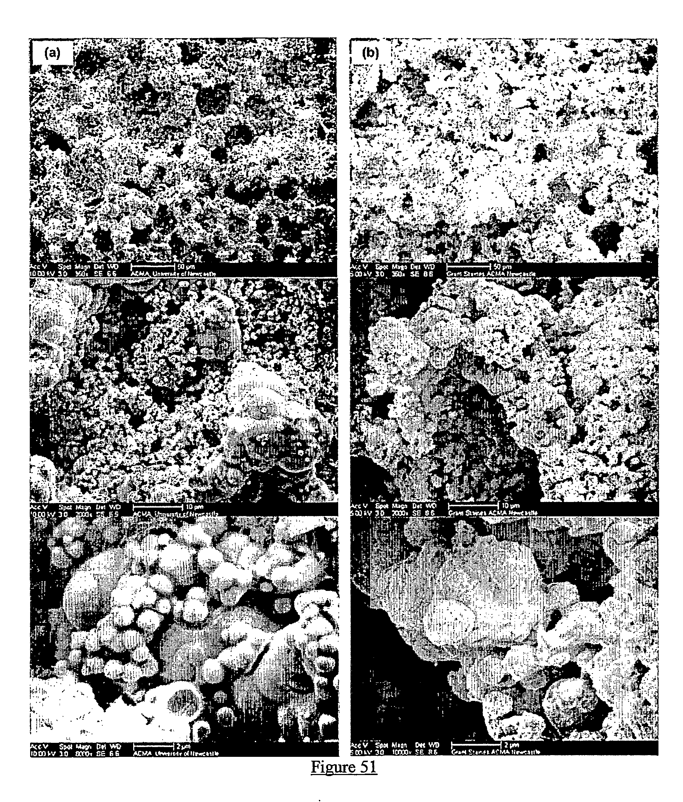

Internal structure of the Pd-plated Ni-P metal foam can be seen in Figure 51. The images in the column (a) were taken before the aging process, while the images in column (b) were taken after the 72 hour aging stage at 600 °C. The pictures show that both, before and after aging, the metal foam followed the contours of the PHP, due to the presence of the large pores. Pd deposited in the form of spheres in the order of several hundred nm up to 1 µm (Figure 51 column (a)). Pd deposition took place on the agglomerated Ni-P metal grains (Figure 51 column (a) with increasing magnification).
After the aging process, the Ni-P spheres can be identified from the pictures as the large agglomerated grains (Figure 51 column (b) with increasing magnification). Most of the Ni-P grains were plated with Pd flakes, as well as small (several hundred nm up to 2 µm) spherical Pd deposits. Chemical analysis of a Pd plated area, after the aging process, is given in Table 7.

**Table 7. EDX analysis of the Pd plated internal structure after aging**

| **Spectrum** | **Oxygen (at%)** | **Phosphorus (at%)** | **Nickel (at%)** | **Palladium (at%)** |
|---|---|---|---|---|
| General Area | 31.89 | 3.47 | 56.31 | 8.32 |

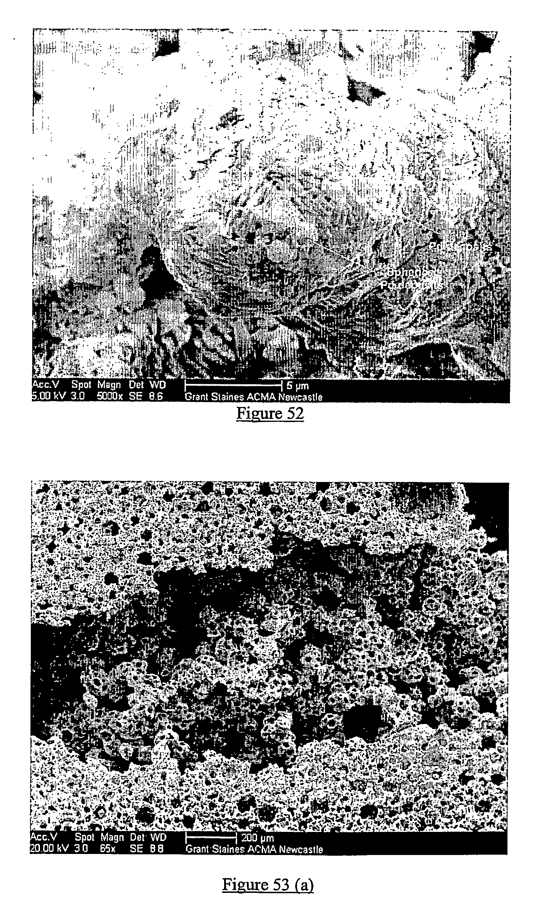

The Pd deposition characteristics on the Ni-P grains after the aging process can be observed in Figure 52. Pd exhibited two different forms; the small spherical grain deposits and needle-like Pd crystals that covered the entire surface of Ni-P grains. Two EDX spots were taken on the different form of Pd deposition, and the results can be seen in Table 8.

**Table 8 EDX spots were taken on the needle-like crystals and spherical deposits as indicated in Figirre 52**

| **Spectrum** | **Oxygen (at%)** | **Phosphorus (at%)** | **Nickel (at%)** | **Palladium (at%)** |
|---|---|---|---|---|
| Point0 (needles) | 83.62 | 2.62 | 4.26 | 9.51 |
| Point1 (spheres) | 67.28 | 4.09 | 3.53 | 25.10 |

### Poly Alloys

In order to demonstrate the generic nature of the technique, a large number of multi-component metals were deposited to obtain poly alloys. The experimental conditions arc summarized below. Detailed SEM structures are also summarized below.

### Nickel-Cobalt-Phosphorus (Ni-Co-P)

Plating Bath:
- 0.027 M Nickel sulphate hexahydrate
- 0.270 M Sodium hypophosphite hydrate
- 0.108 M Cobalt(II) sulphate
- 0.123 M Ammonium citrate
- pH set to 9.5 with sodium hydroxide

Operating Conditions:

| | |
|---|---|
| Polymer Pore Size: | 50-60 µm |
| Flow Rate: | 2 ml/min |
| Water Bath Temperature: | 96 °C |
| Heater Temperature: | 90 °C |
| pH: | 9.5 |

| | |
|---|---|
| 1^{st} side of polymer: (25 mins of soln + 4 mins of distilled water) → repeated 6 times 2^{nd} side of polymer: (25 mins of soln + 4 mins of distilled water) → repeated 6 times | |

### Heat Treatment: 600 °C (1hr+1hr)

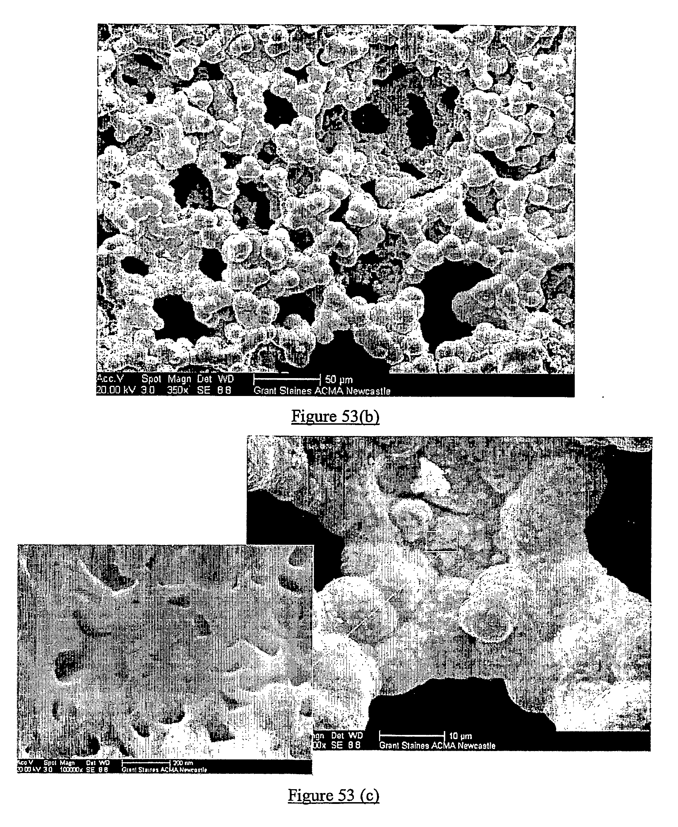

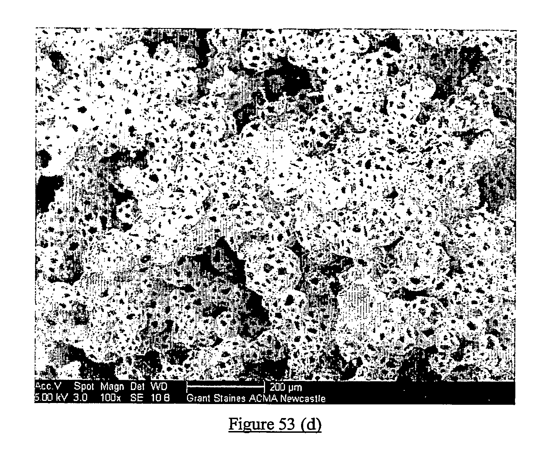

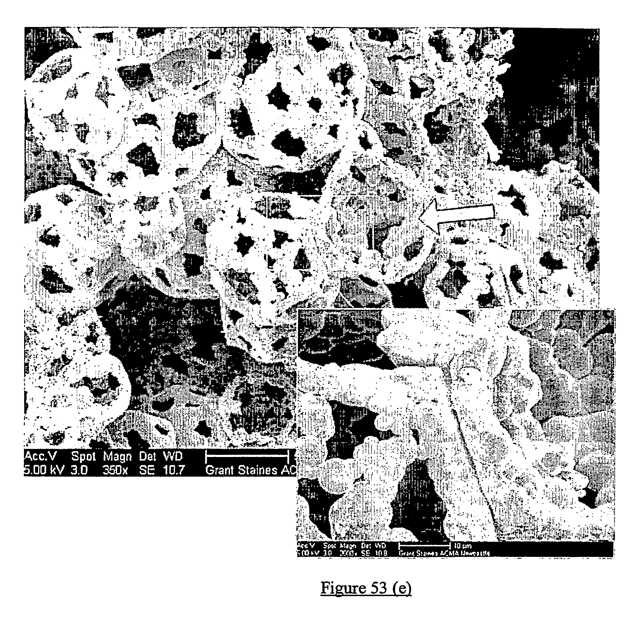

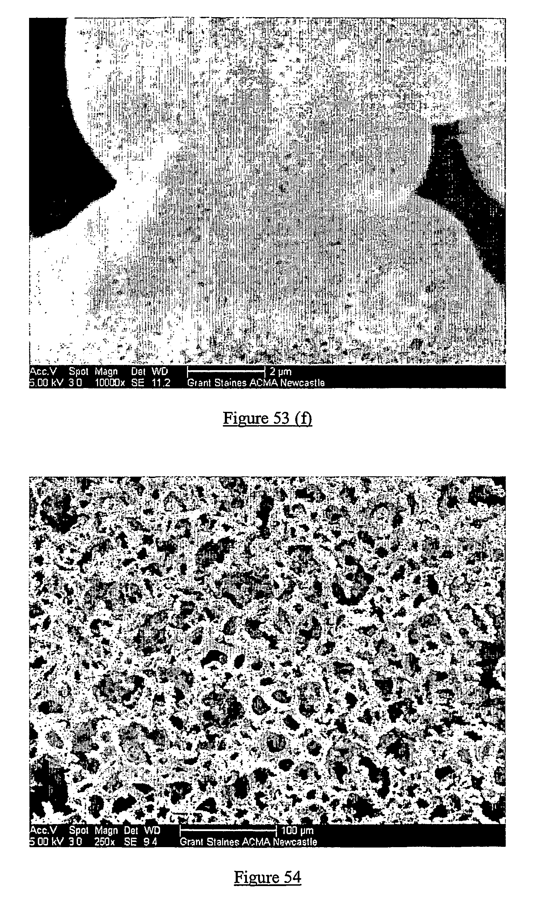

SEM Images of Nickel- Cobalt-Phosphorus polyalloys show that there is no solid layer present on the metallized PHP but the cell structure is different compared with the core. These are shown in Figures 53(a,b,c,d,e,f). Figure 53 (a) shows the surface of the Ni-Co-P disk split, to reveal the inner structure. Figure 53(b) shows the pores on the surface of the metal disk combined the surface with the inner channels, while Figure 53 (c) illustrates the structure of the grain orientation that formed the large pores on the surface. The magnified picture shows the detail of the grain skin. The general appearance of the inner structure of Ni-Co-P constructs is shown in Figure 53 (d). In Figure 53 (e) details of the inner cells are illustrated. The arrow indicates a broken cell where the inner part of the cell was revealed. The magnified image shows an interface between two neighbouring cells. The structure of both inner and outer surfaces of the cells can be observed. The structure of the outer surface was rather flat, while that of inner structure was composed of spherical grains. Figure 53 (f) illustrates that the outer convex walls shown, of the spherical cage like cells are relatively flat and have the nanopores on the surface..

The EDX-spectra of the surface and inner indicate that the surface oxidation is clearly evident and that the surface contains more cobalt than nickel as shown in Tables 9 and 10.

**Table 9. EDX analysis of the Surface of the Ni-Co-P disk**

| **Spectrum** | **Oxygen (at%)** | **Phosphorus (at%)** | **Nickel (at%)** | **Cobalt (at%)** |
|---|---|---|---|---|
| General Area | 42.74 | 0.39 | 20.80 | 36.07 |

**Table 10 EDX analysis results of the internal structure of Ni-Co-P alloys**

| **Spectrum** | **Oxygen (at%)** | **Phosphorus (at%)** | **Nickel (at%)** | **Cobalt (at%)** |
|---|---|---|---|---|
| General Area | 25.09 | 1.59 | 39.85 | 33.47 |

### Nickel-Copper-Phosphorus (Ni-Cu-P)

The following examples are given for illustration of the poly-alloys. Plating Bath:
- 0.027 M Nickel sulphate hexahydrate
- 0.270 M Sodium hypophosphite hydrate
- 0.014 M Copper(II) sulphate hydrate
- 0.110 M Sodium citrate
- 0.450 M Ammonium Chloride
- pH set to 9.0 with sodium hydroxide

### Operating Conditions:

| | |
|---|---|
| Polymer Pore Size: | 50-60 µm |
| Flow Rate: | 2 ml/min |
| Water Bath Temperature: | 96 °C |
| Heater Temperature: | 90 °C |
| pH: | 9 |

| | |
|---|---|
| 1^{st} side of polymer: (25 mins of soln + 4 mins of distilled water) → repeated 6 times 2^{nd} side of polymer: (25 mins of soln + 4 mins of distilled water) → repeated 6 times *Heat Treatment: 600 °C (1hr* + *1hr)* | |

**Table 11. EDX analysis of the general structure of Ni-Cu-P alloys**

| **Spectrum** | **Oxygen (at%)** | **Phosphorus (at%)** | **Nickel (at%)** | **Copper (at%)** |
|---|---|---|---|---|
| General Area | 9.06 | 0.04 | 6.43 | 84.47 |

The above EDX analysis indicate that copper is mainly on the surface of the nickel structure.

### Nickel-Rhenium-Phosphorus (Ni-Re-P)

### Plating Bath:

- 0.027 M Nickel sulphate hexahydrate
- 0.270 M Sodium hypophosphite hydrate
- 1.08 x 10⁻³ M Potassium Perrhenate
- 0.081 M Sodium citrate
- pH set to 9.0 with sodium hydroxide

### Operating Conditions:

| | |
|---|---|
| Polymer Pore Size: | 50-60 µm |
| Flow Rate: | 2 ml/min |
| Water Bath Temperature: | 96 °C |
| Heater Temperature: | 90 °C |
| pH: | 9 |

| | |
|---|---|
| 1^{st} side of polymer: (25 mins of soln + 4 mins of distilled water) → repeated 6 times 2^{nd} side of polymer: (25 mins of soln + 4 mins of distilled water) → repeated 6 times | |

### Heat Treatment: 600 °C (1hr+1hr)

### Table 12. EDX analysis results of the Ni-Re-P alloys

| **Spectrum** | **Oxygen (at%)** | **Phosphorus (at%)** | **Nickel (at%)** | **Rhenium (at%)** |
|---|---|---|---|---|
| General Area | 20.12 | 3.35 | 73.81 | 2.72 |

Ni-Re-P foams have similar structures as Ni-P structures investigated previously. The overall structure is shown in Figure 54.

### Nickel- Rhenium-Tungsten-Phosphorus (Ni-Re-W-P)

### Plating Bath:

- 0.027 M Nickel sulphate hexahydrate
- 0.270 M Sodium hypophosphite hydrate
- 1.27 x 10⁻³ M Potassium Perrhenate
- 0.106 M Sodium tungstate dihydrate
- 0.110 M Sodium citrate
- pH set to 10 with sodium hydroxide

### Operating Conditions:

| | |
|---|---|
| Polymer Pore Size: | 50-60 µm |
| Flow Rate: | 2 ml/min |
| Water Bath Temperature: | 96 °C |
| Heater Temperature: | 90 °C |
| pH: | 10 |

| | |
|---|---|
| 1^{st} side of polymer: (25 mins of soln + 4 mins of distilled water) → repeated 6 times 2^{nd} side of polymer: (25 mins of soln + 4 mins of distilled water) → repeated 6 times | |

### Heat Treatment: 600 °C (1hr+1hr)

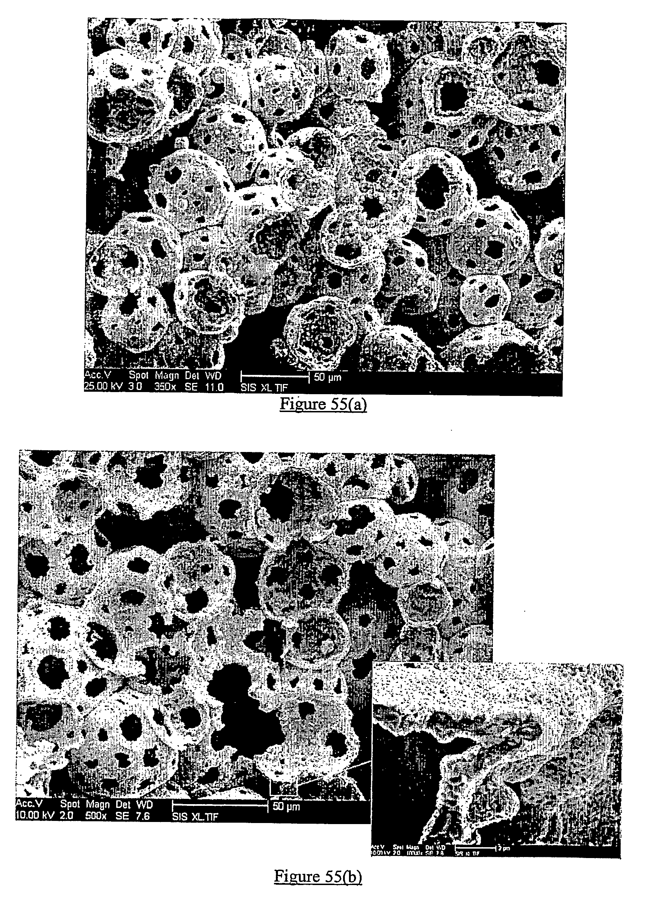

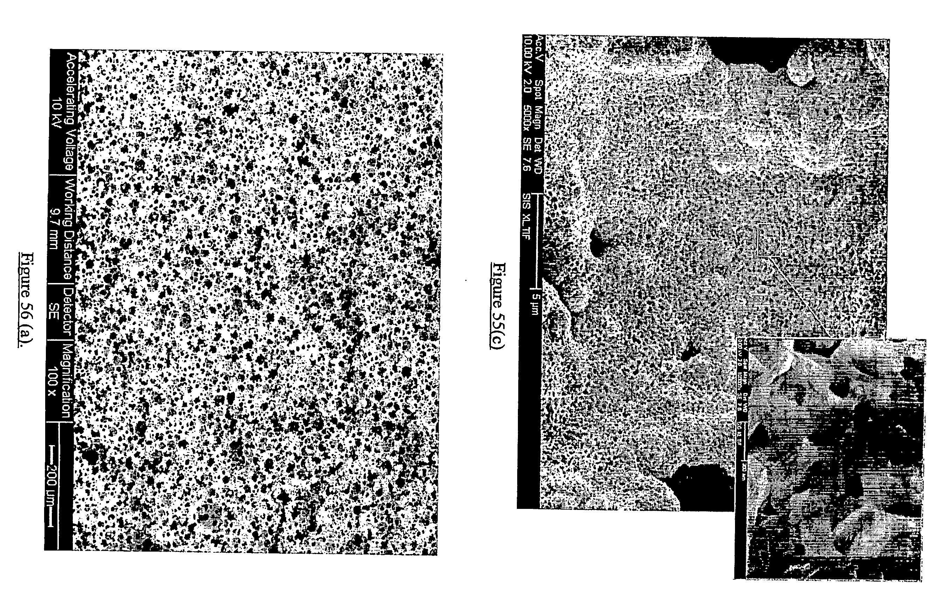

The foams produced by Ni-Re-W-P quaternary alloys had a different structure to the ones produced by Ni-Re-P or Ni-W-P ternary alloys. The metal foams were comprised of spherical cage-like cells From the general appearance of the Ni-Re-W-P foam shown in Figure 55 (a), this is similar to those of Ni-B foams and Ni-Co-P foams, and follows the contours of the porous template material (PolyHIPE Polymer) that was used in the production of all the metal foams mentioned above. The sizes of the cells in Ni-Re-W-P foams varied from 25 to 70 µm in diameter as seen in Figures 55(b). Moreover, the core material and the grain skin forming the large cells were flattened. Similarly to the previous cases, the grains have a flat skin and are nano-porous (Figure 55(c).

The foams, produced from Ni-Re-W-P quaternary alloys and Ni-Co-P ternary alloys, were the most similar structures to the precursor material (PHP), compared to all other foams that were produced by using Ni-P based binary, ternary and quaternary alloys. In these metal foams, the cage-like cells and the interconnecting pores were very well defined, as in the PHP structures. Chemical analysis of the general area (Figure 55(a)) of the Ni-Re-W-P metal foam is given in Table 13.

**Table 13. EDX analysis of the Ni-Re-W-P alloys**

| **Spectrum** | **Oxygen (at%)** | **Phosphorus (at%)** | **Nickel (at%)** | **Rhenium (at%)** | **Tungsten (at.%)** |
|---|---|---|---|---|---|
| General Area | 40.12 | 1.49 | 55.62 | 1.47 | 1.31 |

### Nano-structured Micro-porous Ceramic Materials (REFERENCE METHOD)

Several novel PolyHIPE Polymer preparation techniques are disclosed whereby, a functional 'filler' (chemical/material which can be particulate) can be placed into the aqueous phase of a high internal phase emulsion and subsequently polymerized so that said chemical/material can be activated after polymerisation in order to functionalize the resulting PolyHIPE Polymer. These 'fillers' can also be placed in the oil phase but due to the low volume of the oil phase, the concentration of such 'fillers in the oil phase is restricted.

However, there is a limit to how much 'filler' in the oil or aqueous phase can be incorporated before the emulsion breaks down. Before the emulsion breaks up, it becomes unstable and the dispersed phase droplets coalesce to form large droplets which upon polymerisation, form the 'coalescence' pores dispersed into the primary pores which have not undergone coalescence.

One of the effects of having 'fillers' in the continuous or dispersed phase of the emulsion is the formation of nano-pores within the pore walls of the larger micron sized pores. These nano pores are useful in many applications.

The addition of colloidal silica at high concentrations has not been possible because such solutions are highly viscous. However, silane coated colloidal silica dispersed in aqueous phase at pH 6-8 can be used successfully as internal phase to form High Internal Phase Emulsions (HIPEs) and subsequently polymerized to obtain a micro-porous silica coated polymer which can then be used as a template for further modifications including silica supported catalysts or indeed ceramics. Silane coated colloidal silica (size 7-12 nanometer) dispersions have water-like viscosity although silica loading is high (30-40 wt%). These dispersions are available under the trade name of Bindzil^{™}, with grades Bindzil CC 30 or CC 40.

### Preparation of colloidal silica coated PolyHIPE Polymer (REFERENCE METHOD)

### Oil Phase Composition:

67 wt% styrene
20 wt% Divinylbenzene (DVB) crosslinker
12 wt% Span 80 (surfactant)
1 wt% Lauryl peroxide (oil phase initiator)

### Aqueous Phase:

Bindzil CC 30 (Silane coated colloidal silica content is 30 wt%) or
Bindzil CC 40 (Silane coated colloidal silica content is 40 wt%)

By diluting Bindzil CC 30, Bindzil 5, Bindzil 10, and Bindzil 20 can be obtained with silanated silica concentration ranging from 5wt%, 10 wt% and 20wt% respectively. Both materials (Bindzil CC30 and Bindzil CC 40%) were obtained from EKA Chemicals Sweden, an Akzo Nobel Company.

The phase volume of the aqueous phase was 80%. Emulsification was carried out at 25°C using a stirred stainless steel vessel (12 cm diameter) with a heating jacket. The oil phase was held in the mixing vessel and the aqueous phase heated separately to a specific temperature and then delivered by two peristaltic pumps to four feed points at a constant rate for the duration of the dosing time. Mixing was carried out using three flat impellers at 90 degrees to each other so that the final level of the emulsion was about 1 cm above the top impeller. The lowest impeller on the stirrer shaft was as close to the bottom surface of the vessel as possible. In each experiment, the amount of internal phase was typically 225ml.

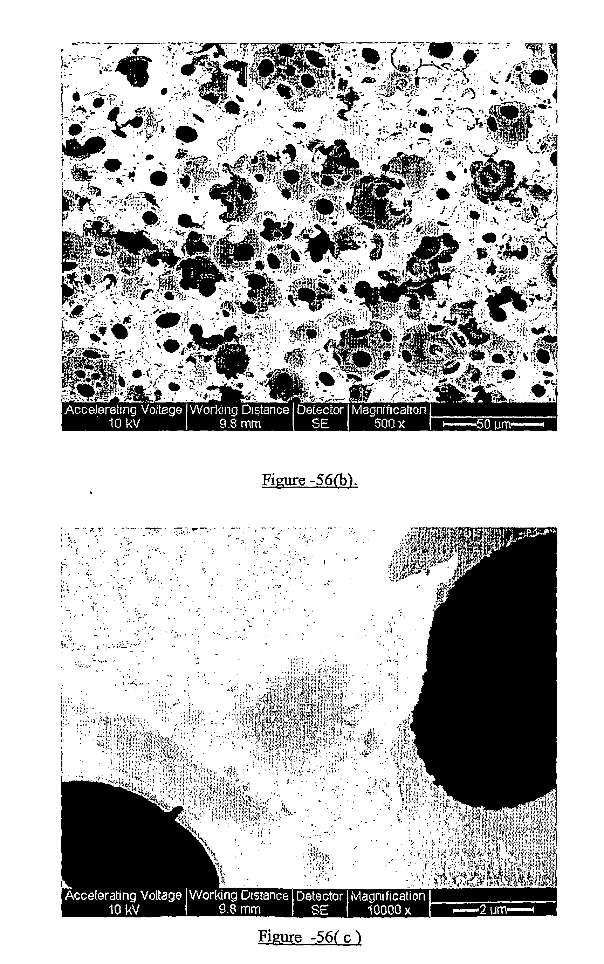

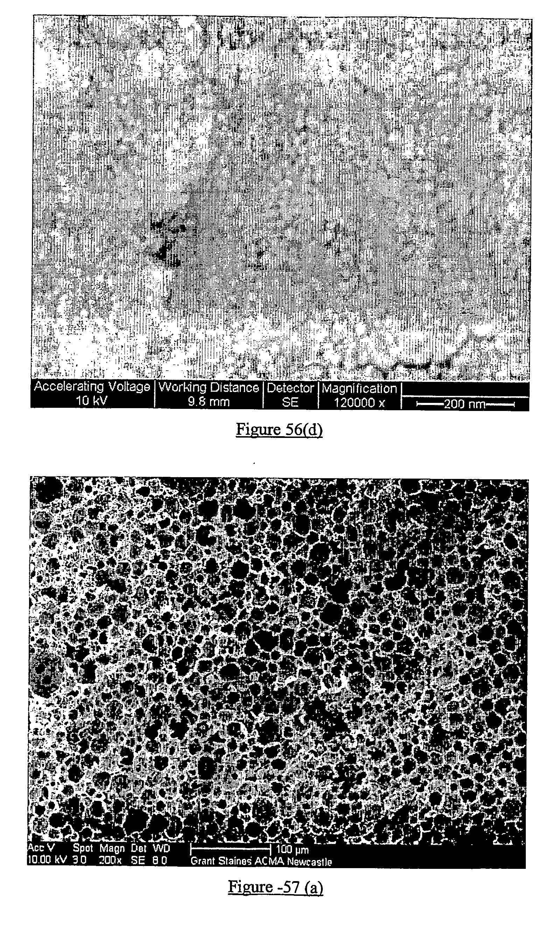

The processing conditions were: the dosing rate of the aqueous phase was 10 minutes, impeller speed (Ω) = 300 rpm and total mixing time (including the dosing time) was 40 minutes. After emulsification, the emulsion was transferred to cylindrical containers (26 mm internal diameter) and the emulsion was polymerized at 60°C for 8 hours. Some of the samples were shaken every 15 minutes during polymerization in the first 4 hours until gelling occurred. Samples of PolyHIPE Polymer were cut into discs which were 26mm in diameter and 4 mm in thickness and they were either examined under scanning electron microscope (SEM) or subsequently treated to obtain ceramic or ceramic-metal composites. The shaken samples were more uniform across the sample tube. This is due to the high density difference between the oil and aqueous phases. When the experiments were repeated with Bindzil CC 40, shaking during polymerization was essential since non-shaken samples were separated out during polymerization. Bindzil CC 40 samples contained large coalescence pores. The structure of silica coated PolyHIPE Polymers is shown in Figure 56 (a,b,c,d) when Bindzil CC 30 is used.

PolyHIPE Polymers containing silica particles have high surface area as shown in Table 14. As the concentration of silica increases, surface area also increases. The reason why the surface area of PolyHIPE Polymer containing Bindzil 40 is lower than that which contains Bindzil 30 is that the particle size of silica in Bindzil 30 is smaller than that of Bindzil 40.

**Table 14: Surface area characteristics of Silica Coated PolyHIPE Polymers**

| Sample ID | Surface Area, m²/g |
|---|---|
| Bindzil CC10 (10% silica) | 15.8 |
| Bindzil CC20 (20% silica) | 49.3 |
| Bindzil CC30 (30% silica) | 87.5 |
| Bindzil CC40 (40% silica) | 58.1 |

### Modification of Silica Coated PolyHIPE Polymers

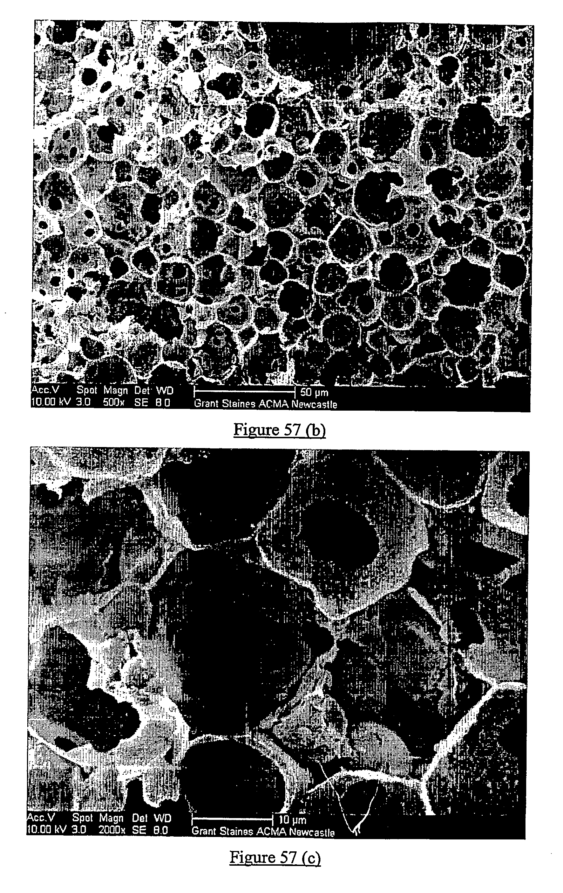

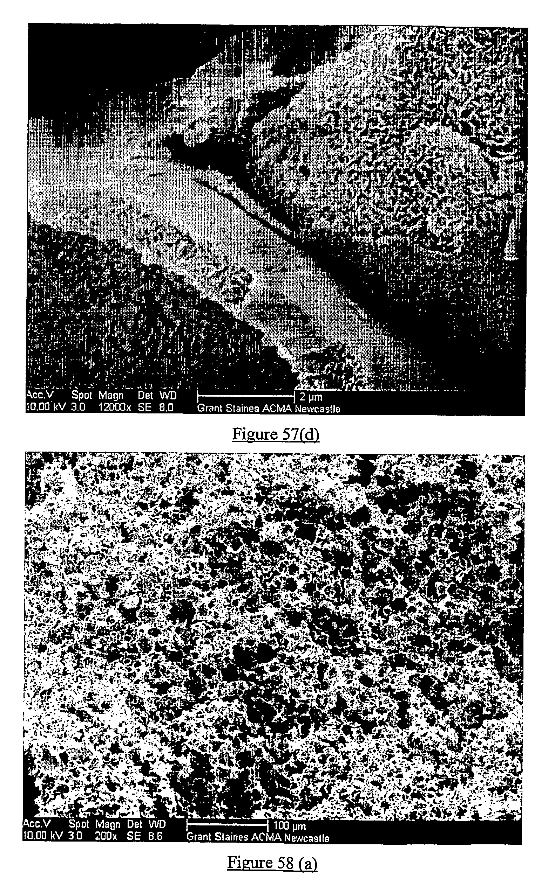

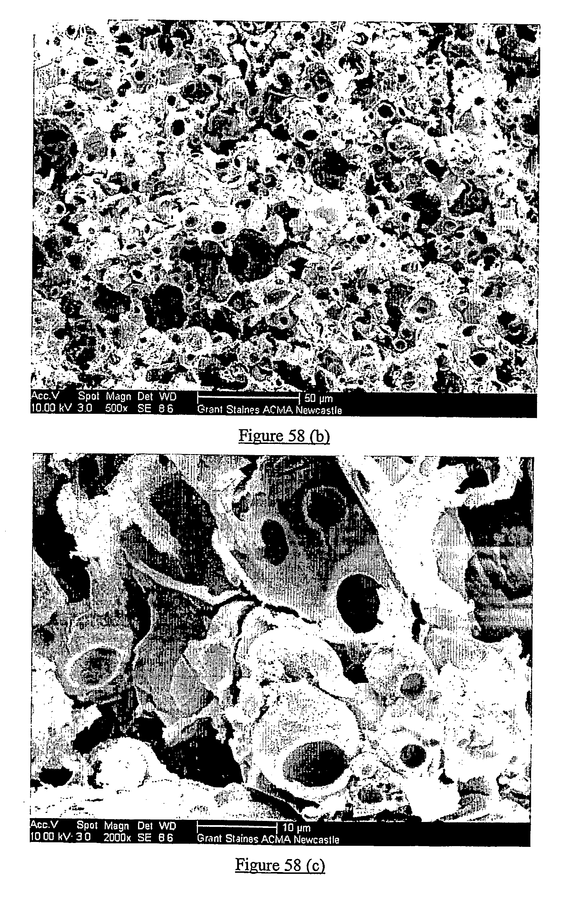

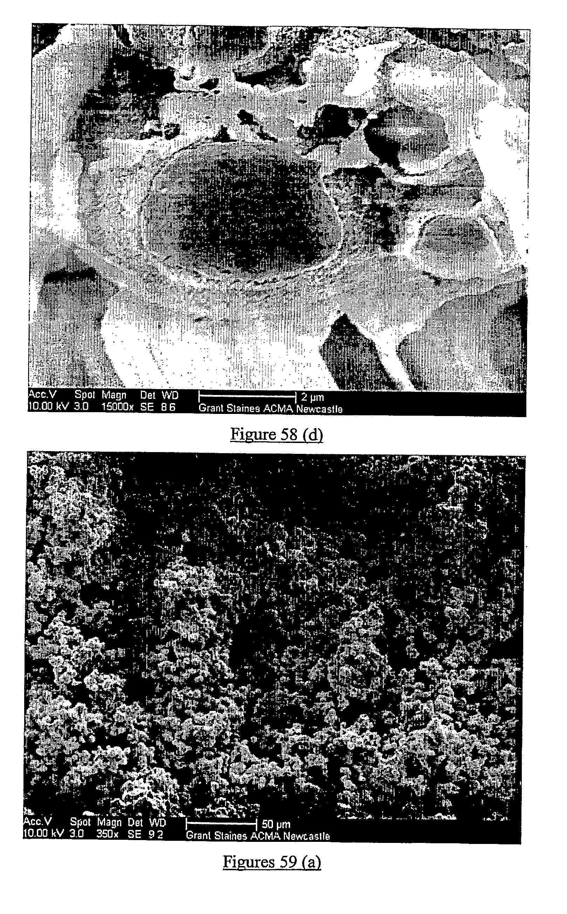

Once silica coated PolyHIPE Polymers are obtained, these structures can be funtionalized by organic or inorganic groups. These include:
**Silane-Coating:** These are important when micro-organisms are supported by these porous structures. Aminoalkyl silane is hydrolyzed on the silica surface which leads to the condensation reaction of silane end groups results in a mono-layer coverage of the silica surface. Amino silanes are particularly useful in biological applications. Because of the penetration of silane into the inter-particle spaces, the wall porosity is reduced but the light transmission is enhanced. The cross-linking of the silica particles before heat treatment can also be achieved using well known techniques.
**Magnesium silica ceramics:** Silica coated samples are dried at 80 C for 24 hours. Dried samples are soaked in 20 wt% solution of Magnesium sulphate solution for 4 hours followed by drying at 80 C for four hours. It is then soaked in 30 ammonium hydroxide solution for four hours. Finally, the sample is heated at 600 C for 3 hours (1 hour heating and 2 hours keeping the temperature at 600 C). The resulting material is polymer free but strong. The examination of these materials under SEM shows that the structure is very similar to that of the template polymer as shown in Figures 57 (a,b,c,d) before the heat treatment and in Figure 58 (a,b,c,d) after heat treatment.

### Metal Deposition on Silica Coated PolyHIPE Polymer Monoliths

Silica coated cylindrical monolithic PolyHIPE Polymer samples (diameter 2.6 mm and thickness 4 mm) were used for nickel deposition. The deposition cell has been described previously. The metal bath solution was kept at room temperature and was pumped into the deposition cell using a syringe driver at a rate of 2 mL/min. In order to cause metal deposition within the pores of the template polymer, the temperature of the polymer was raised to 90 ± 3 °C. In order to achieve this, the deposition cell was heated to 90 °C by using the band heater and charged with demineralized water at 97 °C for 4 minutes at a rate of 40 mL/min. Because the polymer was hydrophobic, wetting the pores with hot water was required to provide better penetration of the plating solution through the pores of the polymer, as well as cleaning the pores from the residues created by electroless deposition reactions. Hot water washing was followed by syringe pumping of the metal bath solution. After pumping 50 ml of solution, the deposition was stopped, hot water washing renewed and the cycle repeated. Throughout the experiment, the band heater and hot water washing kept the polymer constantly at 90 °C. After using 300 ml of metal bath solution, the direction of the flow was reversed until sufficient amount of metal was deposited. In order to obtain more uniform deposition, the flow direction was reversed after each 50 ml of deposition and washing. In order to obtain metal deposition with an open surface structure, Nickel sulphate as the source of nickel was used, rather than nickel chloride which resulted in a skin/core structure in an electroless deposition.

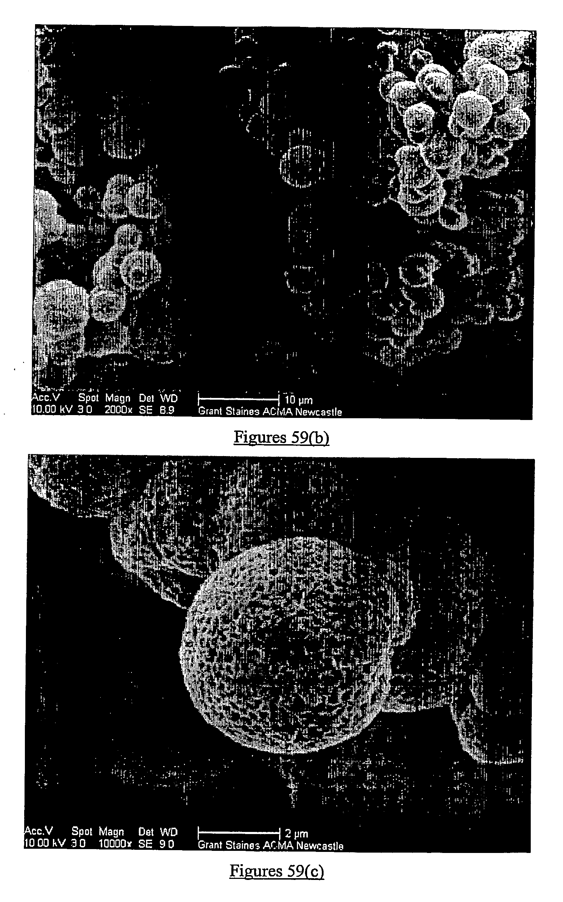

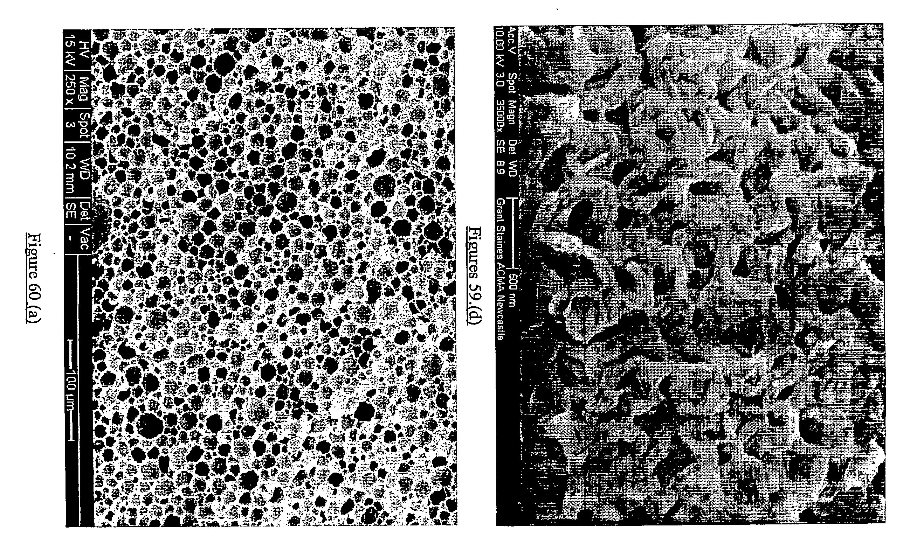

Nickel sulphate deposition bath composition is: 0.17 M nickel sulphate, 0.37 M sodium hypophosphite and pH set to 4.9 using ammonium hydroxide (35% concentration). After deposition, these composites materials were placed in a high temperature oven at room temperature and heated at a rate of 10 C/min. After reaching the target temperature of 600 C, the samples were kept at that temperature for another hour and subsequently taken out to cool at room temperature. The SEM studies of these samples are illustrated in Figures 59 (a,b,c,d). Figures 59(c) and (d) show the surface structure of the grains. It is clear that the presence of silica coating did not influence the micro-structure of the deposited nickel since very similar structures were also observed in PolyHIPE Polymers in the absence of a silica layer.

It was discovered that the coating of silica with silane coupling agent improves the metal deposition.

### Porous Polystyrene- Silane Copolymeric PolyHIPE Polymers with Semi-Transparent Walls

High internal phase emulsion was prepared using the following programme.

### Aqueous Phase:

200 ml demineralised water containing 1 wt% potassium persulphate (80% phase volume).

### Oil Phase:

50 ml of oil phase consisted of:
   Styrene monomer monomer concentration changed in accordance with
   St= 68- X-Y- Z-S wt%
   where St is styrene monomer concentration and
   X= 20 wt% Divinyl benzene (DVB)
   Y= 12 wt% Span 80 (Surfactant)
   Z= 0 or 1 wt%
   S= Vinyl trimethoxysilane: Variable at 5, 10, 15, 20, 30%
Emulsion preperation conditions are:
   Dosing time= 10 minutes
   Additional mixing time= 50 min.

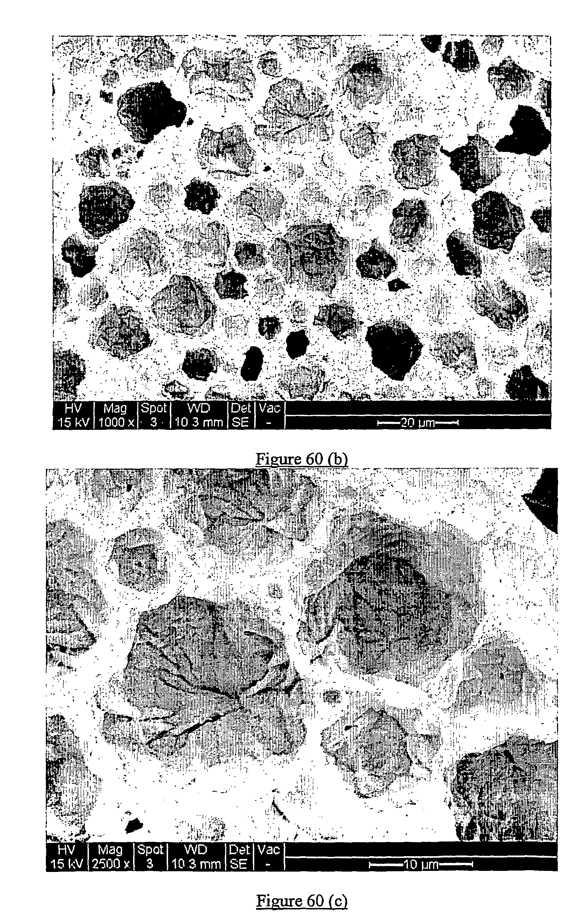

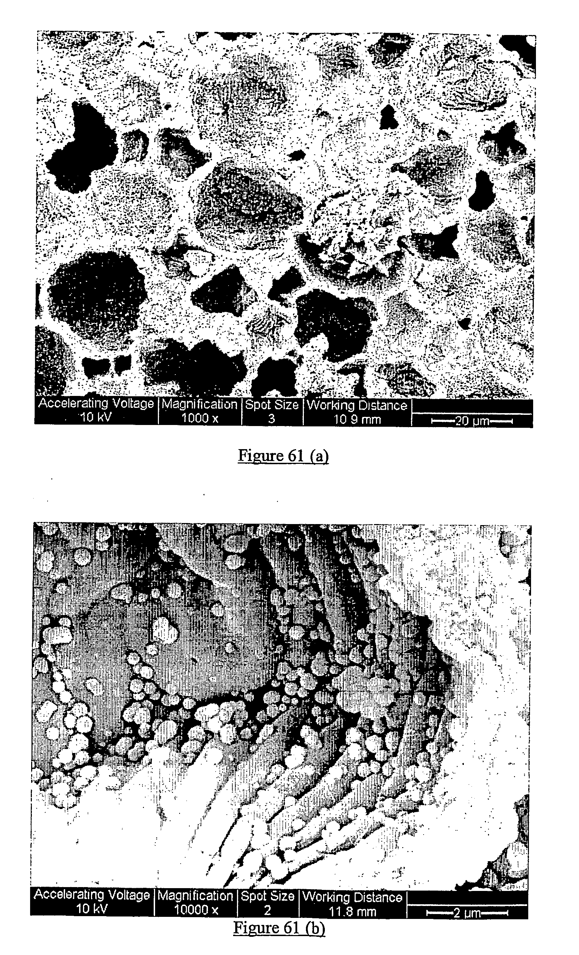

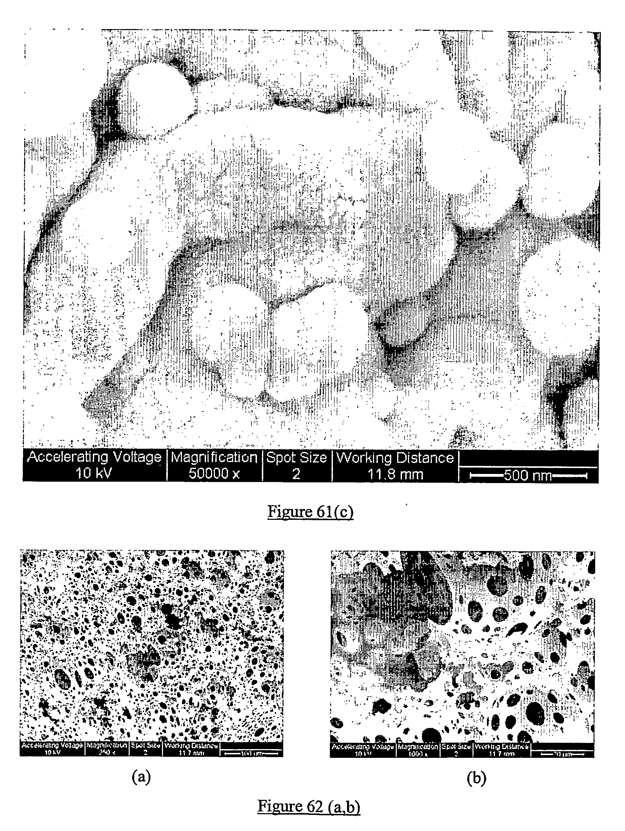

The method of emulsion preparation and equipment is the same as described previously. It was found that when an aqueous phase initiator was used a novel structure was obtained with Styrene- Vinyl trimethoxy silane PHP, in which a silane concentration S=5 - 30%: as shown in Figures 60 (a,b,c) when S=30% and in Figure 61 (a,b,c) when S=5%. It was found that (see also Figures 60 and 61), the pore size of PolyHIPE Polymer is smaller and the pore size distribution is more narrow when Vinyl trimethoxy silane concentration is S=30% compared with when S=5%. Table 15 shows average pore size and pore size span as a function of vinyl trimethoxysilane concentration.

**Table 15. Effect of vinyl trimethoxysilane concentration in oil phase on pore size and pore size distribution.**

| Silane monomer concentration in oil | Average pore size, µm | Pore size distribution (min. and max, pore size), µm |
|---|---|---|
| S=5% | 28.1 | 19.2 - 42.3 |
| S=10% | 22.1 | 13.6 - 32.2 |
| S=30% | 14.8 | 8.8 - 22.5 |

It was discovered that if an oil phase initiator (1 wt% Lauryl peroxide) was used with styrene-vinyl trimethoxysilane copolymers, 'normal' open pore structures were obtained as shown in Figures 62(a) and (b).

The variation of surface area of the styrene - vinyl trimethoxy silane co-polymeric PolyHIPE Polymers are shown in Table 16. It is found that the surface area increases with increasing vinyl trimethoxy concentration.

**Table 16. Effect of vinyl trimethoxysilane monomer concentration on PolyHIPE Polymer surface area**

| PolyHIPE Polymer Code | Vinyl trimethoxy concentration in oil phase (wt %) | Surface area (m²/g) |
|---|---|---|
| S0 | 0 | 5.73 |
| S5 | 5 | 7.77 |
| S10 | 10 | 11.5 |
| S15 | 15 | 11.2 |
| S20 | 20 | 12.2 |
| S25 | 25 | 17.8 |
| S30 | 30 | 55.1 |

### Combination of silane and silane coated silica PolyHIPE Polymers (REFERENCE METHOD)

Instead of using de-mineralized water in the aqueous phase, it is possible to use Bindzil^{™} with a silanated silica concentration ranging from 5-30 wt% while still using an aqueous phase initiator, potassium per sulphate. These Styrene- Vinyltrimethoxy silane PHP with or without Bindzil dispersions yield PolyHIPE Polymer structures with semi-transparent walls.

In this case, the oil phase consists of: 20 wt % divinylbenzene (cross-linking agent); 12 wt % SPAN 80 (surfactant); S % Vinyl trimethoxy silane; (68 - S) wt % Styrene. Oil phase is 20%.

Aqueous phase - 1 wt% Potassium persulphate in Binzil 10 dispersion containing silane coated silica at 10 wt%. The phase volume of the aqueous phase was 80%.

These materials have a high surface area as shown in Table 17. The surface area data of the PolyHIPE Polymers with silane coated silica (Bindzil CC - series) are shown in Table 14 and the surface area data of styrene - vinyl trimethoxysilane copolymeric PHP are given in Table 16. The surface area data show that there is enhancement compared with the components of the PolyHIPE Polymer.

**Table 17. Surface area of styrene - vinyl trimethoxysilane copolymeric PHP containing 10 wt% silane coated silica (Bindzil 10) in the aqueous phase.**

| Polymer Code | Vinyl trimethoxy concentration in oil phase (wt %) | Silane coated silica concentration in aqueous phase (wt %) | Surface area (m²/g) |
|---|---|---|---|
| B10 | 0 | 10 | 15.8 |
| S10B10 | 10 | 10 | 98.8 |
| S15B10 | 15 | 10 | 83.4 |
| S20B10 | 20 | 10 | 92.8 |
| S25B10 | 25 | 10 | 85.7 |
| S30B10 | 30 | 10 | 83.1 |
| S35B10 | 35 | 10 | 93.8 |
| S40B10 | 40 | 10 | 98.3 |

### Highly Adsorbent Functional PolyHIPE Polymers

EP0060138, WO 00/34454 and WO 02/10070 describe the preparation of sulphonated PolyHIPE Polymers by soaking small pieces of this material in concentrated sulphuric acid and raising the temperature to 60 C for various time spans to achieve a desired degree of sulphonation. Sulphonation starts from the exterior causing the large particles to swell and making interconnecting holes smaller thereby reducing the penetration of the acid into the interior. This causes the formation of a hydrophilic skin with a hydrophobic core. Whilst it may be possible to obtain a fairly uniformly sulphonated polymer as a powder in which the diameter of the sulphonated particles is 1cm or less, it is not possible to obtain uniformly sulphonated polymer in bulk. As the size of the pores is decreased, sulphonation becomes more difficult. This technique cannot be used for large size monolithic polymers since the penetration of the acid in the polymer is restricted. After sulphonation, excess acid is washed away or neutralized and the polymer is dried. This process is less than straightforward and several washing cycles are typically required which generates excessive amount of waste.

These drawbacks have been remedied in WO2004/005355 and WO 2004/004880 which describe the preparation of sulphonated polyHIPE polymers by incorporating dilute sulphuric acid as the dispersed (aqueous) phase during the emulsification stage so that the acid is uniformly distributed within the pores when the emulsion is polymerized. After polymerization, the temperature is increased above 100 C which results in the sulphonation of the residual surfactants and further rise in temperature above 150 C, results in the sulphonation of the polymer. However, the sulphonisation time is still long and the resulting polymers (although hydrophilic) are slow to take up water. Although the sulphonation time could be reduced (typically to 45 min) by increasing the temperature to 200°C, high temperatures are not desirable since the degree of sulphonation may be reduced.

The technique disclosed in EP0060138 uses highly concentrated sulphuric acid and is only suitable for small pieces of PHP. After sulphonation, excess acid has to be removed and PHP is washed with water and subsequently neutralized if desired.

Conventional nitration of PHP is time consuming and environmentally unfriendly due to the production of large amounts of dilute acid produced. Production of large monolithic structures is difficult due to poor penetration of acid into the polymer.

The microwave irradiation technique disclosed in US11/403,996 (2006) results in very fast sulphonation or nitration but the resulting polymer's water take up is some 8-12 times of its own weight without any significant swelling (i.e., water take up is due to the filling of the pores). It is discovered that when a PolyHIPE Polymer is produced by placing 10% sulphuric acid in the aqueous phase at the emulsification stage and subsequently polymerized, a nano-structured microporous PolyHIPE Polymer is obtained. If this polymer is micro-waved for typically for 5 minutes, an electrically conductive hydrophilic/hydrophobic polymer is obtained which can take up water to fill its pores without swelling.

Since these polymers are both hydrophilic and hydrophobic, they can be used to remove water soluble or water insoluble toxins from air. Such polymers have activated carbon already generated in-situ during micro-wave irradiation and therefore, they can be used in air-masks or as cigarette filters.

If this polymer is washed in water and isopropanol and subsequently allowed to adsorb sulphuric acid (concentration up to 98%), then upon microwave irradiation, it swells rapidly during sulphonation. The resulting polymer is still electrically conductive and contains carbon particles. When this polymer is neutrilized with concentrated ammonium hydroxide, it becomes creamy colour and its water adsorption capacity increases to 24 fold (90% phase volume) and 35 fold (95% phase volume). However, if the neutralization is conducted with dilute ammonium hydroxide, in-situ generated carbon black is not oxidised and therefore no colour change is observed. The oxidation of the carbon in PolyHIPE Polymer can also be achieved by bleaching. PolyHIPE Polymers which are nitrated and containing residual non-reacted nitric acid can be neutralised using ammonium hydroxide or potassium hydroxide for agricultural applications. It has been found that when sulphonated PolyHIPE Polymer which is neutralised to form a salt is placed in an organic solvent containing water, it absorbs water selectively. If the acid form of the polymer is used, it absorbs all of the solvent, including water. This property can be used to remove water from solvents such as alcohols containing water, hence avoiding distillation. Because these polymers adsorb water, silanated silica dispersions (Bindzil-5 to Bindzil -40) can be adsorbed into them and subsequently dried and functionalized.

## Claims

1. A method of producing a monolithic metal or metal composite having a hierarchic pore structure, the method comprising the steps of:
selecting a template material, said template material having a porous structure, wherein the template material is a Polyhipe Polymer, formed via an emulsion comprising monomeric materials and wherein the emulsion of the Polyhipe Polymer is intimately mixed within the pores of a porous ceramic material prior to polymerisation and the monomeric materials subsequently polymerised;
contacting the template material with a solution of the or each metal to be structuralised;
depositing the or each metal onto the template;
washing the metal coated template before deposition of further metal;
isolating the metal coated template material;
removing, thermally, at least a portion of the template material.

2. A method according to Claim 1, wherein the Polyhipe Polymer is sulphonated or the PolyHIPE Polymer is a co-polymer of styrene and vinyl pyridine to increase the hydrophilicity of the polymer template.

3. A method according to Claim 1 or Claim 2, wherein the Polyhipe Polymer template has pores in the size range of from 1-300 micron.

4. A method according to any of Claims 1 to 3, wherein the temperature at which the polymeric template is removed is from 600-1000C.

5. A method according to any preceding claim, wherein the metal from which the composite is to be formed is selected from nickel, tungsten, cobalt, copper, zinc, rhenium or palladium.

6. A method according to Claim 5, wherein the metal is nickel.

7. A method according to Claim 6 wherein the source of the nickel from which the composite is to be formed is nickel sulphate

8. A method according to any preceding claim wherein deposition is achieved by means of a reducing agent.

9. A method according to Claim 8, wherein the reducing agent is selected from dimethylamineborane, sodium hypophosphite or hydrazine.

10. A method according to any of Claims 1 to 9 wherein the metal from which the composite is to be formed is nickel and the deposition is achieved by means of a reducing agent which is dimethylamineborane.

11. A method according to Claim 10 wherein the temperature at which the metal is deposited onto the template is in the range 70 to 90°C.

12. A method according to any of Claims 1 to 9 wherein the metals from which the composite is to be formed are nickel and tungsten and the deposition is achieved by means of a reducing agent which is sodium hypophosphite.

## Patentansprüche

1. Eine Methode zur Herstellung eines monolithischen Metalls oder Metallverbunds mit einer hierarchischen Porenstruktur, umfassend die Schritte:
Auswahl eines Materials von poröser Struktur für die Template, wobei das Material für die Template ein Polyhipe-Polymer ist, das über eine monomerische Stoffe umfassende Emulsion hergestellt wird, und wobei die Polyhipe-Polymer-Emulsion vor der Polymerisation innerhalb der Poren eines porösen Keramikmaterials intim gemischt wird und die monomeren Polymerstoffe anschließend polymerisiert werden;
Kontaktherstellung zwischen dem Material der Template und einer Lösung des Metalls oder jedes zu strukturierenden Metalls;
Abscheiden des Metalls oder jedes der Metalle auf der Template;
Waschen der metallbeschichteten Template vor der Abscheidung jedes weiteren Metalls;
Isolieren des metallbeschichteten Materials der Template;
Entfernen wenigstens eine Teils des Materials der Templaten auf thermischem Weg.

2. Eine Methode gemäß Anspruch 1, bei der das Polyhipe-Polymer sulphiniert ist oder das Polyhipe-Polymer ein aus Styrol und Vinylpyridin hergestelltes Kopolymer hergestellt ist, um die Wasseranziehungskraft der Polymerschablone zu steigern.

3. Eine Methode gemäß Anspruch 1 oder 2, bei dem die Polyhipe-Template Poren in einem Größenbereich von 1-300 Mikron aufweist.

4. Eine Methode gemäß einem beliebigen der Ansprüche 1 bis 3, bei dem Temperatur, bei der die polymerische Template entfernt wird, zwischen 600° und 1000°C liegt.

5. Eine Methode gemäß einem beliebigen der diesem Anspruch vorhergehenden Ansprüche, bei der das Metall, aus dem der Verbundstoff gebildet werden soll, unter den Metallen Nickel, Wolfram, Kobalt, Kupfer, Zink, Rhenium oder Palladium ausgewählt wird.

6. Eine Methode gemäß Anspruch 5, bei der das Metall Nickel ist.

7. Eine Methode gemäß Anspruch 6, bei der die Nickelquelle, aus der der Verbund hergestellt werden soll, Nickelsulfat ist.

8. Eine Methode gemäß einem beliebigen der diesem Anspruch vorhergehenden Ansprüche, bei der zur Abscheidung ein reduzierendes Agens eingesetzt wird.

9. Methode gemäß Anspruch 8, bei der das reduzierende Agens unter den Substanzen Dimethylaminoboran, Natriumhypophosphit oder Hydrazin ausgewählt wird.

10. Eine Methode gemäß einem beliebigen der diesem Anspruch vorhergehenden Ansprüche 1 bis 9, bei dem Nickel das Metall ist, aus dem der Verbund hergestellt werden soll und die Abscheidung mit dem reduzierenden Agens Dimethylaminboran bewirkt wird.

11. Eine Methode gemäß Anspruch 10, bei der die Temperatur, bei der das Metall auf der Template abgeschieden wird, im Bereich von 70° bis 90°C liegt.

12. Eine Methode gemäß einem beliebigen der diesem Anspruch vorhergehenden Ansprüche 1 bis 9, bei dem Nickel und Wolfram die Metalle sind, aus dem der Verbund hergestellt werden soll und die Abscheidung mit dem reduzierenden Agens Natriumhypophosphit bewirkt wird.

## Revendications

1. Un procédé de production d'un composite en métal ou métal monolithique ayant une structure de pores hiérarchique, le procédé comprenant les étapes de :
sélection d'un matériau de matrice, ledit matériau de matrice ayant une structure poreuse, dans lequel le matériau de matrice est un Polymère Polyhipe, formé par une émulsion comprenant des matériaux monomériques et dans lequel l'émulsion du Polymère Polyhipe est intimement mélangée au sein des pores d'un matériau céramique poreux avant la polymérisation et les matériaux monomériques ensuite polymérisés ;
mise en contact du matériau de matrice avec une solution du ou de chaque métal devant être structuré ;
dépôt du ou de chaque métal sur la matrice ;
lavage de la matrice recouverte de métal avant le dépôt d'un autre métal ;
isolation du matériau de matrice recouvert de métal ;
retrait, de façon thermique, d'au moins une partie du matériau de matrice.

2. Un procédé selon la Revendication 1, dans lequel le Polymère Polyhipe est sulfoné ou le Polymère PolyHIPE est un copolymère de styrène et pyridine vinyle pour accroitre l'hydrophilie de la matrice polymère.

3. Un procédé selon la Revendication 1 ou 2, dans lequel la matrice en Polymère Polyhipe a des pores d'une taille de 1 à 300 microns.

4. Un procédé selon n'importe lesquelles des Revendications 1 à 3, dans lequel la température à laquelle la matrice polymérique est retirée est de 600 à 1000°C.

5. Un procédé selon n'importe laquelle des revendications précédentes, dans lequel le métal à partir duquel le composite doit être formé est sélectionné parmi nickel, tungstène, cobalt, cuivre, zinc, rhénium ou palladium.

6. Un procédé selon la Revendication 5, dans lequel le métal est du nickel.

7. Un procédé selon la Revendication 6 dans lequel la source du nickel à partir duquel le composite doit être formé est le sulfate de nickel.

8. Un procédé selon n'importe laquelle des revendications précédentes dans lequel le dépôt est réalisé au moyen d'un réducteur.

9. Un procédé selon la Revendication 8, dans lequel le réducteur est sélectionné parmi diméthylamine borane, hypophosphite de sodium ou hydrazine.

10. Un procédé selon n'importe lesquelles des Revendications 1 à 9 dans lequel le métal à partir duquel le composite doit être formé est le nickel et le dépôt est réalisé au moyen d'un réducteur qui est diméthylamine borane.

11. Un procédé selon la Revendication 10 dans lequel la température à laquelle le métal est déposé sur la matrice est comprise entre 70 et 90°C.

12. Un procédé selon n'importe lesquelles des Revendications 1 à 9 dans lequel les métaux à partir desquels le composite doit être formé sont le nickel et le tungstène et le dépôt est réalisé au moyen d'un réducteur qui est l'hypophosphite de sodium.
